# EUROPEAN PATENT SPECIFICATION

(11) **EP 2 988 469 B1**
(45) Date of publication and mention of the grant of the patent: **27.11.2019**
(21) Application number: 15181453.0
(22) Date of filing: 18.08.2015
(51) Int. Cl.: H04L 29/06, G06F 9/451, G06F 3/14

(54) **A METHOD AND APPARATUS FOR UPDATING A USER INTERFACE OF ONE PROGRAM UNIT IN RESPONSE TO AN INTERACTION WITH A USER INTERFACE OF ANOTHER PROGRAM UNIT**
VERFAHREN UND VORRICHTUNG ZUR AKTUALISIERUNG EINER BENUTZERSCHNITTSTELLE EINER PROGRAMMEINHEIT ALS ANTWORT AUF EINE INTERAKTION MIT EINER BENUTZERSCHNITTSTELLE EINER ANDEREN PROGRAMMEINHEIT
PROCÉDÉ ET APPAREIL DE MISE À JOUR D'UNE INTERFACE UTILISATEUR D'UNE UNITÉ DE PROGRAMME EN RÉPONSE À UNE INTERACTION AVEC UNE INTERFACE UTILISATEUR D'UNE AUTRE UNITÉ DE PROGRAMME

(30) Priority: 19.08.2014 GB 201414736
(43) Date of publication of application: 24.02.2016
(73) Proprietor: RedSky IT (Hemel) Limited, Hemel Hempstead, Hertfordshire HP2 4TZ (GB)
(72) Inventor: Saunders, Jason, Hemel Hempstead, Hertfordshire HP2 4TZ (GB)
(74) Representative: CSY London

(56) References cited:
- US-A1- 2014 123 019

## Description

The present invention relates to methods and apparatuses for updating a user interface of one program unit in response to an interaction with a user interface of another program unit. Typically, a program unit will have a particular task or function to perform. Often a plurality of program units will be operated together to perform an aggregate task or function. In operating, or performing the task or function, program units may seek access to one or more resources, such as a value of a variable, stored in a particular location.

In some cases, more than one program unit will seek access to a particular resource.

When more than one program unit in an active session seeks to access a particular resource within a relational database management system, session blocking may occur. A particular session may access a resource, and whilst that session is accessing that resource, it may block other sessions from accessing the same resource. Another session must therefore wait until the first session has finished accessing the resource, and released the block, before that session can then access the resource. This results in series processing of requests. Thus one delay in the request queue will affect all other subsequent requests in that queue.

Another drawback with conventional systems is that, in the case where more than one program unit contains a particular element, and it is desired to change each instance of that element, a series of requests, for example to a server, must be made in respect of the separate instances of that element.

It would be desirable to provide a method and apparatus which does not suffer from such drawbacks.US 2014/0123019 describes methods, apparatus, and computer programs products for multi-device visual correlation interaction.

According to a first aspect of the present invention there is provided a method for updating a user interface of a second program unit in response to an interaction with a user interface of a first program unit in a browser-based application wherein the browser-based application is arranged to communicate with a server over a network,
the method comprising the steps of:
receiving a user interaction at the user interface of the first program unit, wherein the user interaction is associated with a first user interface element in the first program unit;
sending a message from the browser-based application to the server in response to the user interaction, the message comprising a first user interface element ID and a first program unit state ID, identifying the first user interface element and the first program unit respectively, and data representing the user interaction;
receiving the message at the server;
accessing at the server a first program unit state object, representing the state of the first program unit, in dependence on the first program unit state ID;
processing the user interaction at the server, including running a first program unit code portion, and a second program unit code portion in dependence on the first program unit code portion, the first and second program unit code portions being associated with the first and second program units respectively;
accessing at the server a second program unit state object, representing the state of the second program unit;
modifying at the server the first and second program unit state objects in dependence on the processing of the user interaction;
modifying at the server a change state list object, which represents modifications made in dependence on the processing of the user interaction to the first and second program unit state objects, and comprises information relating to the state of the first user interface element, and to the state of a second user interface element in the second program unit identified by a second user interface element ID, which information is associated with the first and second user interface element IDs respectively;
sending a response from the server to the browser-based application, the response comprising data representing the change state list object and including the first and second user interface element IDs;
receiving the response at the browser-based application; and
updating the first and second user interface elements in the user interfaces of the first and second program units respectively in response to the received response to the user interaction.

This arrangement can facilitate efficient management of information across different program units. It can facilitate the passing of information between different program units. It can facilitate the passing of information between the different program units by allowing the states of the program units to interact at the server. Information relating to the state of the user interface elements may be termed state information. Such state information may include information concerning elements of program units, such as field entries and/or values or status indicators, for example whether or not a checkbox is checked.

The passing of information between different program units is facilitated by, for example, the processing of the user interaction received at the user interface of the first program unit including running both first and second program unit code portions. In this way, user interface elements (for example first and second user interface elements) of both the first and second program units can be updated in response to the user interaction. This approach avoids the need for separate user interactions in respect of each of the first user interface element (in the user interface of the first program unit) and the second user interface element (in the user interface of the second program unit). In other words, an event such as the user interaction coming into one program unit can affect at least one other program unit.

This allows a reduction in the number of messages sent from the browser-based application to the server in order to update a given number of user interface elements, i.e. for a given functionality. This can apply irrespective of the nature of the program units in which user interface elements to be updated are located. There may be a corresponding reduction in the number of responses sent from the server to the browser-based application.

Each message sent from the browser-based application to the server has associated therewith certain network overheads - in terms of server load per message, overhead per message before the program unit code portions run, and/or network bandwidth usage. A reduction in the number of messages thus leads to a network overhead latency saving. Similarly, benefits may follow from a corresponding reduction in the number of responses sent by the server. Thus, the present approach, in reducing the required number of messages and/or responses to achieve a given result can increase efficiency.

The message may be a request. The request may be an http request.

The updating of user interface elements in user interfaces of more than one program unit as a result of a user interaction received at the user interface of one program unit can overcome issues relating to session blocking. Session blocking can occur when multiple requests indicate a need for write access to the same session object. This may occur in particular using IIS with session access. Rather than needing to wait for more than one request to be allowed write access to a particular session - for example processing a request relating to a user interaction relating to a first program unit, then processing another request relating to a user interaction relating to a second program unit - the present approach allows one request to lead to the processing of a user interaction relating to both a first and a second program unit. This can overcome the issue of session blocking and reduce potential delays in the processing of the user interaction.

In this way, the present approach leads to an improved interface for software writers, allowing them to write software, making use of the browser-based application, such as program units, that can benefit from these advantages. Further, it is noted that the benefits of the present approach are obtainable irrespective of the particular task or function of the program units themselves. Rather, the present approach underlies the functioning of the respective program units, and facilitates their effective operation within the browser-based application.

The method may be undertaken within the framework of an application such as a large scale application. The application may be server-oriented. In other words, the application may be suited to server-based programming and/or to execute tasks mainly or solely at a server. This can have advantages where processing of data is done local to the storage location of the data, in other words, processing data at a server where the data is stored at the server. This local processing may be more efficient than processing data at a location remote from its storage location. The method may be a server-side method for updating the user interface of one program unit in response to an interaction with the user interface of another program unit.

The framework may be a development environment. The framework may support application programming. The framework may allow a programmer to provide computer program code, coding for a particular functionality, to provide custom handling of events within the framework and/or within one or more program units. The framework may be an application programming interface (API).

The browser-based application may be at a client device in communication with the server over the network. The browser-based application may be a web browser. The browser-based application may be a single page application (SPA). The SPA may be within the web browser.

The browser-based application may comprise the first and second program units. The step of sending a message from the browser-based application may comprise sending the message from one of the first and second program units, for example from the first program unit, to the server.

Each program unit may perform a separate and/or distinct task. Each program unit may comprise separate and/or distinct code. Each program unit comprises a code portion. The code portion comprises computer program code that codes for a particular functionality for the program unit. This functionality may be the program unit's task or purpose. The program unit may comprise a user interface (Ul) portion. The UI portion may comprise computer program code that defines a UI for the program unit. The UI portion may solely comprise computer program code that defines a UI for the program unit. The UI portion may comprise an XML portion comprising XML code. In other words XML code within the XML portion may define the UI of the program unit.

The program unit may be an application - commonly termed an 'app'. The program unit may be a web-based program unit.

The program unit may utilise the functionality of the browser-based application. Such functionality may include the UI of the browser-based application, input operations, output operations and/or memory management.

The method may comprise the step of initialising the first program unit at the server. The step of initialising the first program unit may comprise calling/running the first program unit code portion in order for the first program unit to be able to handle the user interaction. The step of initialising the first program unit may comprise creating the first program unit state object. Loading or running the first program unit may cause the XML portion of the first program unit to be read and an object representing the XML portion to be created. The object representing the XML portion may be the first program unit state object. The first program unit state object may be an in-memory representation of the first program unit.

The first program unit state object may already exist.

The first program unit code portion is able to modify the first program unit state object. The first program unit state object may be stored in the user session. The first program unit state object may be identified by or associated with a first program unit state ID. The first program unit state ID may represent a contextID and an applD. The first program unit state ID may comprise a contextID and an applD. In other words, the first program unit code portion may be caused to run at the server, enabling the functionality of the first program unit to be accessed. Of course, the first program unit may be pre-initialised, i.e. the first program unit code portion may already have been caused to run at the server.

In the case that the first program unit is pre-initialised, and the first program unit state object already created, information relating to this may be associated with a user session in which the first program unit is pre-initialised. The information may be associated with the user session by a session key.

In this case, the first program unit state object may be retrieved or restored as part of the method step. The step of retrieving or restoring the first program unit state object may comprise receiving from the browser-based application as part of the message the session key relating to the user session in which the first program unit is pre-initialised and retrieving or restoring the first program unit state object using the session key.

The first program unit state object may comprise a first program unit user interface state. This gives the state of the user interface of the first program unit on which basis the user interface of the first program unit can be rendered, for example in the browser-based application.

The method may comprise the step of initialising the second program unit at the server. The step of initialising the second program unit may comprise calling/running the second program unit code portion in order for the second program unit to be able to handle the user interaction. The step of initialising the second program unit may comprise creating the second program unit state object. Loading or running the second program unit may cause the XML portion of the second program unit to be read and an object representing the XML portion to be created. The object representing the XML portion may be the second program unit state object. The second program unit state object may be an in-memory representation of the second program unit.

The second program unit state object may already exist.

The second program unit code portion is able to modify the second program unit state object. The second program unit state object may be stored in the user session. The second program unit state object may be identified by or associated with a second program unit state ID. The second program unit state ID may represent a contextID and an applD. The second program unit state ID may comprise a contextID and an applD. In other words, the second program unit code portion may be caused to run at the server, enabling the functionality of the second program unit to be accessed. Of course, the second program unit may be pre-initialised, i.e. the second program unit code portion may already have been caused to run at the server.

In the case that the second program unit is pre-initialised, and the second program unit state object already created, information relating to this may be associated with a user session in which the second program unit is pre-initialised. The information may be associated with the user session by a session key.

In this case, the second program unit state object may be retrieved or restored as part of the method step. The step of retrieving or restoring the second program unit state object may comprise receiving from the browser-based application as part of the message the session key relating to the user session in which the second program unit is pre-initialised and retrieving or restoring the second program unit state object using that session key.

The second program unit state object may comprise a second program unit user interface state. This gives the state of the user interface of the second program unit on which basis the user interface of the second program unit can be rendered, for example in the browser-based application.

The step of modifying the change state list object may comprise the step of creating the change state list object. In other words, the change state list object may already exist. The step of modifying the change state list object may comprise logging the changes made to the first and/or second program unit state objects. The changes may be logged at the server. The change state list object may be a single object.

The change state list object may be a global object. Put another way, the change state list object may include or represent changes or modifications made to either or both of the first and second program units. The change state list object may be accessible to each of the program units. In other words, each of the program units, and/or the program unit code portions, may be able to read from and/or write to the change state list object. In this way, the states of different program units can interact. The interaction may be by the state of an element in one program unit being modified in dependence on the state of an element in another program unit.

In the step of sending the response from the server to the browser-based application, the response may comprise at least a portion of the change state list object. In other words, the response may comprise a portion or all of the change state list object. In sending data relating only to those user interface elements which have changed, the response can reduce or minimise the set of user interface changes to be sent to the browser-based application. This avoids the need to re-serialise (i.e. regenerate) the entire user interface after each response. This approach both reduces the amount of data that the response needs to contain, and reduces the subsequent processing of the response at the browser-based application. This increases the efficiency of the system.

The steps of updating identified elements of the first and second program units may comprise modifying the identified elements of the first and second program units, respectively, in the browser-based application.

The utilisation of IDs identifying the program unit and user interface elements (i.e. the program unit state ID and the user interface element ID, respectively) allows the identification of each program unit, and each user interface element within the respective program unit, within the browser-based application.

The browser-based application may comprise a dashboard. The dashboard may be a set of at least one dashboard panel. The dashboard or the dashboard panel may comprise at least one program unit. The browser-based application may comprise a plurality of dashboards, each of which dashboards comprises at least one program unit.

The dashboards and/or dashboard panels can be sequentially named/numbered, for example: dashboard1, dashboard2, dashboardpanel1, dashboardpanel2, and so on.

The program unit state ID may comprise a contextID and a program unit ID (or appID). The appID may be an ID given to the program unit, such as "App1". The appID may be associated with the program unit according to the name and/or location of the program unit. The contextID may represent the context in which the program unit is located. For a program unit (App1) located in a dashboard panel (dashboardpanel1) within a dashboard (dashboard1), the contextID may be dashboard1_dashboardpanel1. The program unit state ID may be the appID appended to the contextID: dashboard1_dashboardpanel1_App1.

Each user interface element may be identified by or associated with an internalID and an externalID. The internalID may be an ID by which a program unit developer refers to the user interface element. For example, for a field 'A' within a program unit, the internalID may be 'A'. The externalID uniquely identifies each user interface element. The externalID may represent the location of the user interface element within the browser-based application hierarchy. The hierarchy may include the dashboard and dashboard panel within which the user interface element is located. The hierarchy may include the program unit within which the user interface element is located. The externalID may comprise the contextID, the appID and the internalID. The externalID may comprise the program unit state ID and the internalID. For example, the externalID of a field 'A' in the example of the previous paragraph may be dashboard1_dashboardpanel1_App1_A. The user interface element ID may comprise the externalID.

Thus it is possible to uniquely identify each dashboard, each dashboard panel, each program unit within the various dashboards and dashboard panels, and each user interface element within the respective program units.

This unique addressing system enables the response sent from the server to cause the updating of multiple user interface elements which are associated with different externalIDs, even where the program units and/or user interface elements are internally identical, i.e. have the same internalIDs.

A single type of program unit can therefore be used multiple times within the browser-based application, or within a dashboard, without conflict between the user interface elements occurring. This increases the reliability of the system.

As part of the processing of the user interaction, the server runs the second program unit code portion in dependence on the first program unit code portion. This may be done by the first program unit code portion comprising a reference to the second program unit and/or to the second program unit code portion. The first program unit may create an instance of the second program unit and can then call the functionality in the second program unit.

The reference in the first program unit code portion may be a notification object, which when run causes a notification event to be sent to the second program unit and/or the second program unit code portion. In this way, as the first program unit code portion is run, a notification event is sent to the second program unit, which notification event may pass the value of a user interface element from the first program unit to the second program unit. This may be done at the server. The second program unit may modify its program unit state object in dependence on the passed value, leading to the modification of the change state list object.

The reference in the first program unit code portion may be a direct reference to the second program unit and/or to the second program unit code portion. In this way, the second program unit can be considered to be 'embedded' within the first program unit. The first program unit can be said to 'contain' the second program unit. One or more program units may be nested within a container program unit. That is to say, the first program unit may contain the second program unit and a third program unit, or the first program unit may contain the second program unit which, in turn, contains the third program unit. Variations involving multiple program units, and multiple levels of nesting are possible.

Embedding one or more program units in a container program unit allows flexibility of use of the various program units. For example, it allows a program unit to be used in multiple different scenarios, and/or it allows mixing and matching the functionality of different program units to suit a particular purpose.

Running the first program unit may cause the second program unit to also run. This leads to two program units at runtime, each with separate states, i.e. the first program unit state object and the second program unit state object.

The second program unit code portion may be included in the first program unit. The second program unit code portion may be retained separately from the first program unit. Where the second program unit code portion is retained separately from the first program unit, this allows multiple references to the second program unit to be made in different other program units, which will all refer to the same version of the second program unit. This allows more efficient maintenance of the second program unit and/or the second program unit code portion.

In other words, including the second program unit code portion in the first program unit (embedding the second program unit in the first program unit), facilitates the embedding of the user interface, and program logic, of the second program unit within the first program unit. As such, this constitutes the reuse of the second program unit, and user interface, as opposed to simply replicating the functionality of the second program unit within the first program unit. The avoidance of replication of functionality is desirable in the development of a software framework because such replication can lead to maintainability issues. One example of such an issue is that where new functionality is added to the second program unit, that new functionality would need to be replicated again in the first program unit in order to maintain equivalence. Another example is that where a defect is identified in the second program unit, the rectification of that defect would need to be replicated in the first program unit.

The reuse of a program unit is effectively no different from making a "library" - but in this case the program unit which includes the user interface and all handling of user interaction is being made into a reusable library component.

According to a second aspect of the present invention there is provided a method for updating a user interface of a second program unit in response to an interaction with a user interface of a first program unit in a browser-based application, the browser-based application being arranged to communicate with a server over a network, wherein the server is arranged under the control of software, the method comprising the steps of:
receiving a message at the server from the browser-based application, the message comprising a first user interface element ID and a first program unit state ID, identifying a first user interface element and a first program unit respectively, and data representing a user interaction received at the browser-based application;
accessing at the server a first program unit state object, representing the state of the first program unit, in dependence on the first program unit state ID;
processing the user interaction at the server, including running a first program unit code portion, and a second program unit code portion in dependence on the first program unit code portion, the first and second program unit code portions being associated with the first and second program units respectively;
accessing at the server a second program unit state object, representing the state of the second program unit;
modifying at the server the first and second program unit state objects in dependence on the processing of the user interaction;
modifying at the server a change state list object, which represents modifications made in dependence on the processing of the user interaction to the first and second program unit state objects, and comprises information relating to the state of the first user interface element, and to the state of a second user interface element in the second program unit identified by a second user interface element ID, which information is associated with the first and second user interface element IDs respectively; and
sending a response from the server to the browser-based application, the response comprising data representing the change state list object and including the first and second user interface element IDs.

According to a third aspect of the present invention there is provided a server for use in a method for updating a user interface of a second program unit in response to an interaction with a user interface of a first program unit in a browser-based application, the server being arranged to communicate with the browser-based application over a network, the server being arranged under the control of software to:
receive a message at the server from the browser-based application, the message comprising a first user interface element ID and a first program unit state ID, identifying a first user interface element and a first program unit respectively, and data representing a user interaction received at the browser-based application;
access at the server a first program unit state object, representing the state of the first program unit, in dependence on the first program unit state ID;
process the user interaction at the server, including running a first program unit code portion, and a second program unit code portion in dependence on the first program unit code portion, the first and second program unit code portions being associated with the first and second program units respectively;
access at the server a second program unit state object, representing the state of the second program unit;
modify at the server the first and second program unit state objects in dependence on the processing of the user interaction;
modify at the server a change state list object, which represents modifications made in dependence on the processing of the user interaction to the first and second program unit state objects, and comprises information relating to the state of the first user interface element, and to the state of a second user interface element in the second program unit identified by a second user interface element ID, which information is associated with the first and second user interface element IDs respectively; and
send a response from the server to the browser-based application, the response comprising data representing the change state list object and including the first and second user interface element IDs.

According to a fourth aspect of the present invention there is provided a method for updating a user interface of a second program unit in response to an interaction with a user interface of a first program unit in a browser-based application at a client device, wherein the browser-based application is arranged to communicate with a server over a network wherein the client device is arranged under the control of software, the method comprising the steps of:
receiving a user interaction at the user interface of the first program unit, wherein the user interaction is associated with a first user interface element in the first program unit;
sending a message from the browser-based application to the server in response to the user interaction, the message comprising a first user interface element ID and a first program unit state ID, identifying the first user interface element and the first program unit respectively, and data representing the user interaction;
receiving a response at the browser-based application from the server, the response comprising data representing a change state list object and including first and second user interface element IDs, the second user interface element ID identifying a second user interface element in the second program unit, wherein the change state list object represents modifications made in dependence on the processing of the user interaction at the server to first and second program unit state objects which represent the state of the first and second program units respectively, and comprises information relating to the state of the first and second user interface elements, which information is associated with the first and second user interface element IDs respectively; and
updating the first and second user interface elements in the user interfaces of the first and second program units respectively in response to the received response.

According to a fifth aspect of the present invention there is provided a browser-based application at a client device for use in a method for updating a user interface of a second program unit in response to an interaction with a user interface of a first program unit in the browser-based application, wherein the browser-based application is arranged to communicate with a server over a network, the client device being arranged under the control of software to:
receive a user interaction at the user interface of the first program unit, wherein the user interaction is associated with a first user interface element in the first program unit;
send a message from the browser-based application to the server in response to the user interaction, the message comprising a first user interface element ID and a first program unit state ID, identifying the first user interface element and the first program unit respectively, and data representing the user interaction;
receive a response at the browser-based application from the server, the response comprising data representing a change state list object and including first and second user interface element IDs, the second user interface element ID identifying a second user interface element in the second program unit, wherein the change state list object represents modifications made in dependence on the processing of the user interaction at the server to first and second program unit state objects which represent the state of the first and second program units respectively, and comprises information relating to the state of the first and second user interface elements, which information is associated with the first and second user interface element IDs respectively; and
update the first and second user interface elements in the user interfaces of the first and second program units respectively in response to the received response.

According to a sixth aspect of the present invention there is provided a method for updating a user interface of a second program unit in response to an interaction with a user interface of a first program unit in a browser-based application at a client device, wherein the browser-based application is arranged to communicate with a server over a network, and wherein the server and the client device are arranged under the control of software, the method comprising the steps of:
receiving a user interaction at the user interface of the first program unit, wherein the user interaction is associated with a first user interface element in the first program unit;
sending a message from the browser-based application to the server in response to the user interaction, the message comprising a first user interface element ID and a first program unit state ID, identifying the first user interface element and the first program unit respectively, and data representing the user interaction;
receiving the message at the server;
accessing at the server a first program unit state object, representing the state of the first program unit, in dependence on the first program unit state ID;
processing the user interaction at the server, including running a first program unit code portion, and a second program unit code portion in dependence on the first program unit code portion, the first and second program unit code portions being associated with the first and second program units respectively;
accessing at the server a second program unit state object, representing the state of the second program unit;
modifying at the server the first and second program unit state objects in dependence on the processing of the user interaction;
modifying at the server a change state list object, which represents modifications made in dependence on the processing of the user interaction to the first and second program unit state objects, and comprises information relating to the state of the first user interface element, and to the state of a second user interface element in the second program unit identified by a second user interface element ID, which information is associated with the first and second user interface element IDs respectively;
sending a response from the server to the browser-based application, the response comprising data representing the change state list object and including the first and second user interface element IDs;
receiving the response at the browser-based application; and
updating the first and second user interface elements in the user interfaces of the first and second program units respectively in response to the received response to the user interaction.

According to a seventh aspect of the present invention there is provided a system for updating a user interface of a second program unit in response to an interaction with a user interface of a first program unit in a browser-based application at a client device, wherein the browser-based application is arranged to communicate with a server over a network, the system comprising the client device and the server, the client device and the server being arranged under the control of software; wherein the client device is arranged to:
receive a user interaction at the user interface of the first program unit, wherein the user interaction is associated with a first user interface element in the first program unit; and
send a message to the server in response to the user interaction, the message comprising a first user interface element ID and a first program unit state ID, identifying the first user interface element and the first program unit respectively, and data representing the user interaction; wherein the server is arranged to:
receive the message from the browser-based application;
access at the server a first program unit state object, representing the state of the first program unit, in dependence on the first program unit state ID;
process the user interaction at the server, including running a first program unit code portion, and a second program unit code portion in dependence on the first program unit code portion, the first and second program unit code portions being associated with the first and second program units respectively;
access at the server a second program unit state object, representing the state of the second program unit;
modify at the server the first and second program unit state objects in dependence on the processing of the user interaction;
modify at the server a change state list object, which represents modifications made in dependence on the processing of the user interaction to the first and second program unit state objects, and comprises information relating to the state of the first user interface element, and to the state of a second user interface element in the second program unit identified by a second user interface element ID, which information is associated with the first and second user interface element IDs respectively; and
send a response to the browser-based application, the response comprising data representing the change state list object and including the first and second user interface element IDs;
and wherein the client device is further arranged to:
receive the response from the server; and
update the first and second user interface elements in the user interfaces of the first and second program units respectively in response to the received response.

According to an eighth aspect of the present invention there is provided a method for updating a user interface of a second program unit in response to an interaction with a user interface of a first program unit, wherein the first and second program units are within an application at a client device, wherein the application is arranged to communicate with a server over a network wherein the client device is arranged under the control of software, the method comprising the steps of:
receiving a user interaction at the user interface of the first program unit, wherein the user interaction is associated with a first user interface element in the first program unit;
sending a message from the application to the server in response to the user interaction, the message comprising a first user interface element ID, identifying the first user interface element a first program unit state ID, identifying the first program unit, and data representing the user interaction;
receiving a response at the application from the server, the response comprising data representing a change state list object and including a second user interface element ID, wherein: the second user interface element ID identifies a second user interface element in the second program unit; and the change state list object: represents modifications made in dependence on the processing of the user interaction at the server to a second program unit state object which represents the state of the second program unit, and comprises information relating to the state of the second user interface element, which information is associated with the second user interface element ID; and
updating the second user interface element in the user interface of the second program unit in response to the received response.

The response may further include the first user interface element ID, and the change state list object may further represent modifications made in dependence on the processing of the user interaction to the first program unit state object representing the state of the first program unit and may comprise information relating to the state of the first user interface element which is associated with the first user interface element ID, and the method may comprise the step of updating the first user interface element in the user interface of the first program unit in response to the received response. According to a ninth aspect of the present invention there is provided a method for updating a user interface of a second program unit in response to an interaction with a user interface of a first program unit, where in the first and second program units are within an application, the application being arranged to communicate with a server over a network, wherein the server is arranged under the control of software, the method comprising the steps of:
receiving a message at the server from the application, the message comprising a first user interface element ID and a first program unit state ID, identifying a first user interface element and a first program unit respectively, and data representing a user interaction received at the application;
accessing at the server a first program unit state object, representing the state of the first program unit, in dependence on the first program unit state ID;
processing the user interaction at the server, including running a first program unit code portion, and a second program unit code portion in dependence on the first program unit code portion, the first and second program unit code portions being associated with the first and second program units respectively;
accessing at the server a second program unit state object, representing the state of the second program unit;
modifying at the server the second program unit state object in dependence on the processing of the user interaction;
modifying at the server a change state list object, which represents modifications made in dependence on the processing of the user interaction to the second program unit state object, and comprises information relating to the state of a second user interface element in the second program unit identified by a second user interface element ID, which information is associated with the second user interface element ID; and
sending a response from the server to the application, the response comprising data representing the change state list object and including the second user interface element ID.

The method may comprise the steps of modifying at the server the first program unit state object in dependence on the processing of the user interaction, modifying the change state list object which comprises information relating to the state of the first user interface element which is associated with the first user interface element ID, and the step of sending the response may comprise sending data representing the change state list object including the first user interface element ID.

The application may be a browser-based application.

According to a tenth aspect of the present invention there is provided a method for updating a user interface of a second program unit in response to an interaction with a user interface of a first program unit, wherein the first and second program units are within an application wherein the application is arranged to communicate with a server over a network,
the method comprising the steps of:
receiving a user interaction at the user interface of the first program unit, wherein the user interaction is associated with a first user interface element in the first program unit;
sending a message from the application to the server in response to the user interaction, the message comprising: a first user interface element ID, identifying the first user interface element; and a first program unit state ID, identifying the first user interface element and the first program unit respectively, and data representing the user interaction;
receiving the message at the server;
accessing at the server a first program unit state object, representing the state of the first program unit, in dependence on the first program unit state ID;
processing the user interaction at the server, including running a first program unit code portion, and a second program unit code portion in dependence on the first program unit code portion, the first and second program unit code portions being associated with the first and second program units respectively;
accessing at the server a second program unit state object, representing the state of the second program unit;
modifying at the server the second program unit state object in dependence on the processing of the user interaction;
modifying at the server a change state list object, which represents modifications made in dependence on the processing of the user interaction to the second program unit state object, and comprises information relating to the state of a second user interface element in the second program unit identified by a second user interface element ID, which information is associated with the second user interface element ID;
sending a response from the server to the application, the response comprising data representing the change state list object and including the second user interface element ID;
receiving the response at the application; and
updating the second user interface element in the user interface of the second program unit in response to the received response to the user interaction.

According to an eleventh aspect of the present invention there is provided a computing device configured to operate as a client device comprising an application for use in a method for updating a user interface of a second program unit in response to an interaction with a user interface of a first program unit in the application, where the first and second program units are within the application, wherein the application is arranged to communicate with a server over a network, the client device being arranged under the control of software to:
receive a user interaction at the user interface of the first program unit, wherein the user interaction is associated with a first user interface element in the first program unit;
send a message from the application to the server in response to the user interaction, the message comprising a first user interface element ID and a first program unit state ID, identifying the first user interface element and the first program unit respectively, and data representing the user interaction;
receive a response at the application from the server, the response comprising data representing a change state list object and including a second user interface element ID, the second user interface element ID identifying a second user interface element in the second program unit, wherein the change state list object represents modifications made in dependence on the processing of the user interaction at the server to a second program unit state object which represents the state of the second program unit, and comprises information relating to the state of the second user interface element, which information is associated with the second user interface element ID; and
update the second user interface element in the user interface of the second program unit in response to the received response.

According to a twelfth aspect of the present invention there is provided a computing device configured to operate as a server for use in a method for updating a user interface of a second program unit in response to an interaction with a user interface of a first program unit, wherein the first and second program units are within an application, the server being arranged to communicate with the application over a network, the server being arranged under the control of software to:
receive a message at the server from the application, the message comprising a first user interface element ID and a first program unit state ID, identifying a first user interface element and a first program unit respectively, and data representing a user interaction received at the application;
access at the server a first program unit state object, representing the state of the first program unit, in dependence on the first program unit state ID;
process the user interaction at the server, including running a first program unit code portion, and a second program unit code portion in dependence on the first program unit code portion, the first and second program unit code portions being associated with the first and second program units respectively;
access at the server a second program unit state object, representing the state of the second program unit;
modify at the server the second program unit state object in dependence on the processing of the user interaction;
modify at the server a change state list object, which represents modifications made in dependence on the processing of the user interaction to the second program unit state object, and comprises information relating to the state of a second user interface element in the second program unit identified by a second user interface element ID, which information is associated with the second user interface element ID; and
send a response from the server to the application, the response comprising data representing the change state list object and including the second user interface element ID.

All of the sub features described above in relation to any one aspect of the invention are equally applicable to the other aspects of the invention. Corresponding sub features could be written in each case with necessary changes in wording from method to apparatus. However, they are not written here for the sake of brevity.

According to a thirteenth aspect of the present invention there is provided a computer program comprising code portions which when loaded and run on a computer causes the computer to carry out any method step, or any combination of method steps as defined above or causes the computer to operate as a server or client device as defined above.

There may be a set of computer programs for a set of computers, at least one program being arranged to cause a respective computer to act as a client device as defined above and at least one program being arranged to cause a respective computer to act as a server as defined above.

According to a fourteenth aspect of the present invention there is provided a computer program product comprising a machine readable data carrier on which is carried a computer program or set of computer programs as defined above.

The data carrier may be readable by a computer and/or other machine. The data carrier may comprise a signal or a storage device, for example physical media such as a DVD or DVD ROM, CD or CD ROM, hard drive, flash memory stick or so on.

Embodiments of the present invention will now be described, by way of example only, with reference to the accompanying drawings, in which:
Figure 1 shows a schematic of a computing system;
Figure 2 shows a schematic representation of a user interface of a program unit;
Figure 3 shows a schematic representation of a user interface of a browser-based application showing multiple program units;
Figure 4 shows a process of loading a program unit;
Figure 5 shows a process of interacting with a program unit in a browser-based application;
Figure 6 shows another process of interacting with a program unit in a browser-based application;
Figure 7 shows a schematic representation of a user interface of a browser-based application showing example program units;
Figures 8A-8C show schematic representations of a user interface of a browser-based application showing example program units displaying various data; and
Figure 9 shows another process of interacting with a program unit in a browser-based application.

In large scale computing applications, it is possible to take a modular approach wherein the large scale application comprises multiple smaller program units. Each program unit will typically perform a particular task. Examples of such tasks include maintaining a customer record, inputting an invoice and presenting a report.

Typically the large scale application will provide a framework which the individual program units may use. The framework can be provided via an Application Programming Interface (API). The framework, such as the API, can provide functionality for the program units that includes a user interface, input/output operations and memory management.

It is possible for the framework to be modified so as to optimise a process or to provide a different user interface. This modification of the framework does not necessitate changes in the program units that use the functionality of the framework. In other words the program units need only address the problem or problems that the respective program unit aims to solve. This will simplify the program units themselves and the maintenance of the program units. In a similar way, adding new program units involves considering the new task that the program unit addresses, but does not need to consider detailed aspects of the user interface of the framework. This simplifies the addition of new program units.

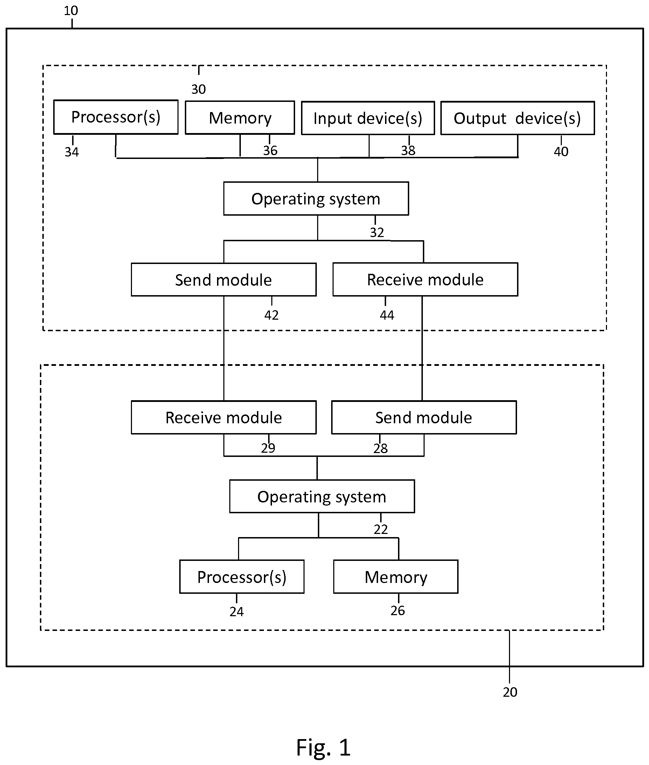

The large scale computing application can be implemented on a computing system 10 comprising a server 20 and a client device 30 (see Figure 1). In one implementation, the client device is a computing device remote from the server 20. This may be a desktop computer or tablet computer or the like.

Typically, the server 20 will comprise an operating system 22, one or more processor 24 and memory 26. The server 20 is arranged for communicating with at least one client device 30 over a network. This is achieved via the provision of a send module 28 and a receive module 29. This could also be achieved by a combined send/receive module where appropriate.

The client device 30 comprises an operating system 32, one or more processor 34, memory 36, one or more input device 38, one or more output device 40, a send module 42 and a receive module 44. The input device 38 is a conventional device such as a mouse pointer, a keyboard or a touch screen interface. The output device 40 is a conventional device such as a screen or display. As mentioned above with reference to the server 20, the send module 42 and the receive module 44 allow the communication of the client device 30 with the server 20 over a network. These modules are shown schematically as separate modules in Figure 1 but it will be apparent that the client device 30 could comprise a combined send/receive module where appropriate.

The application framework is a browser-based application. In particular, the browser-based application is a web browser. The user interface of the web browser is presented as a Single Page Application (SPA). In SPAs, user interface components are created within a single webpage.

The present implementation of the system is largely server based. All user interface (Ul) events that occur in the browser-based application, in other words user interactions with user interface elements of the UI at the browser-based application, are sent to the server. The server then decides what action to take as a result of the user interaction with the UI of each app and how the Uls of the apps are modified. This contrasts with the system that allows an application software programmer to control or operate on the app UI directly in the client device 30/browser-based application. As an example such manipulation directly within the browser-based application could be via JavaScript.

In a large scale application comprising multiple line-of-business style apps which typically deal with storage and retrieval of data, there is significant interaction with data in a database during the processing of these apps. It is therefore more efficient for the processing of the apps to occur at the server 20 i.e. "near" the database. This reduces the need for large amounts of data to be accessed over the network connecting the server 20 and the client device 30 thus reducing the load on such a network.

Allowing the system to remain server-oriented also means that the code portion of each app can also remain server oriented rather than needing to deal with/take into account interactions both at a server 20 and at a client device 30. This reduces the complexity of the code required and therefore facilitates a more efficient running of the code on the system. It would of course be possible to allow the app code portion to contain code that relates to client side operations, for example JavaScript operations within a particular environment.

In conventional HTML web-based forms, data can be entered in one or more fields. On submission of the HTML form, for example when a user clicks a "submit" button, the whole form or page (i.e. all the data) is sent to the server and the data is subsequently validated at the server. Cross-validation of field values against one another is possible since the server has access to the data in each field. If the cross-validation reveals any errors or inconsistencies then a message or error can be sent back to the web browser from the server. The downside with this approach is that the whole form, i.e. the whole set of data in each of the fields, is sent to the server each time even if only one field value is modified. This therefore unnecessarily increases the amount of data that is sent with a consequential increase in network overhead which might impact performance.

Communication between the SPA in the web browser at the client device 30 and the server 20 can be via AJAX requests. Such AJAX requests do not result in full page reloads.

Conventionally, when dealing with an AJAX-based interface (i.e. an interface which makes use of AJAX requests), multiple data entry fields can be presented to a user. Data is validated on entry into each field. In other words, the server is contacted each time data is entered in a field and the server separately validates the entered data. Cross-validation is not possible in this approach because the server only sees data from one field at a time so it cannot cross-validate the data in one field against data in other fields.

A conventional web-based interface might employ links to other webpages which themselves would perform each particular individual task. In comparison to this, an advantage of the SPA model is that all static page resources, JavaScript, CSS, images and so on, only need to be loaded once rather than for each page in a multipage application. This reduces network bandwidth usage and computational effort on both the client and server in processing those resources.

A program unit is often termed an "app". Each app will have an associated user interface (Ul). The UI is described in XML. Each app also has some program code or app code associated with it. Thus, each app comprises a UI portion and a code portion.

Turning first to the UI portion, an illustrative example of some XML that defines a UI is:

```
 <App title="A">
 <AppCanvas>
 <VLayout>
 <Form margin="5">
   <fields>
    <field ID="A" />
    <field ID="B" />
    <field ID="C" type="checkbox" />
   </fields>
 </Form>
 </VLayout>
 </AppCanvas>
 </App>
```

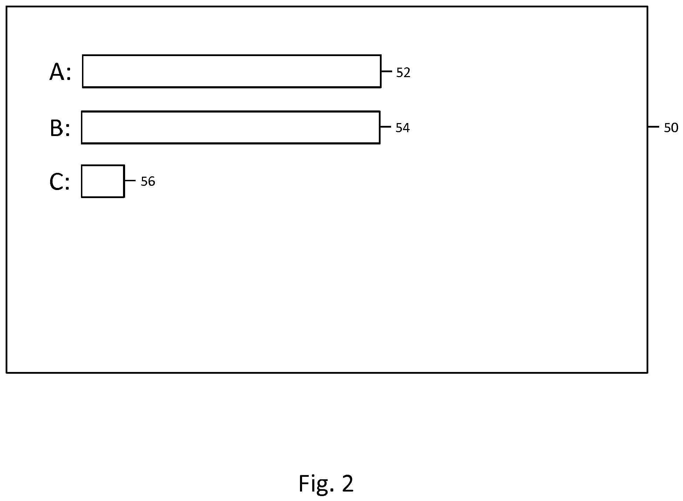

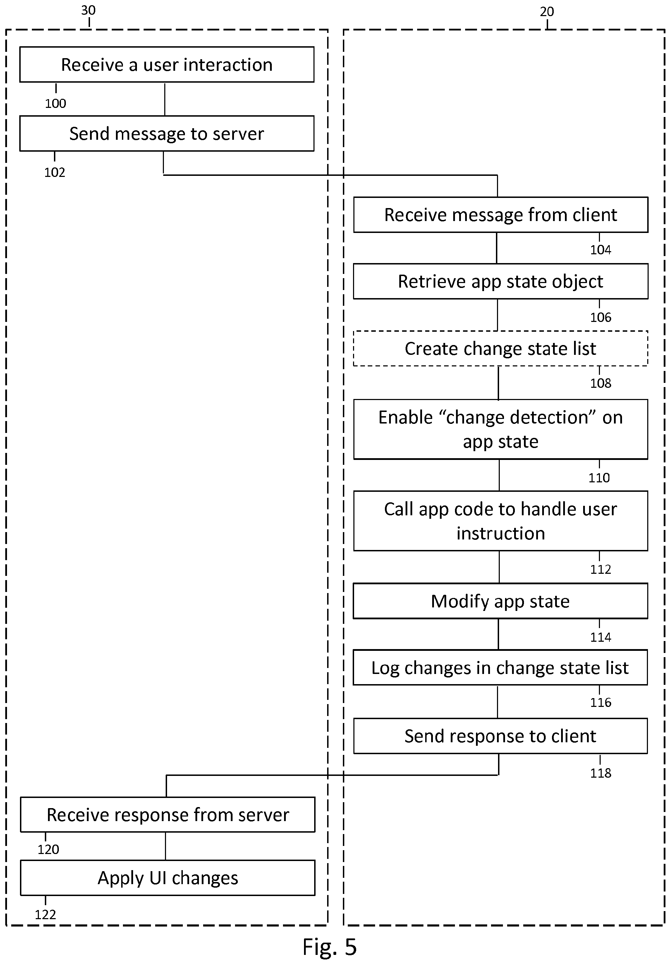

This example XML defines a UI as shown in Figure 2. The assignment of IDs to elements within the UI will now be discussed. Reference to the operation of the system using the app UI 50 as an example will follow in the context of discussing Figure 5. The app UI 50 comprises three fields: field A 52 is a text box, field B 54 is also a text box and field C 56 is a checkbox.

In the example app UI 50 shown schematically in Figure 2, the app code portion can be written such that checkbox C is checked when the values entered in fields A and B match predetermined values or sets of values. One example of this would be to set checkbox C to be checked if the values entered in A and B are identical, and to set checkbox C as unchecked if the values in A and B are not identical. Another example is for field A to represent a supplier and for field B to represent a contract. If values are entered in fields A and B, such that the supplier is associated with the contract, then checkbox C can be set to be checked. This provides both confirmation to a user that the given supplier is associated with the given contract and also allows this fact to be used for additional processing in other apps. In other words, the value of the checkbox can be taken as an input in additional processing. Interaction with this example UI will be discussed further below in the context of the process shown in Figure 5.

It is convenient at this stage to consider how each of the UI elements, i.e. A, B and C, in the app UI 50 are addressed.

First, each of the fields has an internal identifier by which the fields can be identified within the app itself - this is called the internalID. Referring to the example XML above it can be seen that the internalID of field A is "A", the internalID of field B is "B" and the internalID of field C is "C". Thus, each of the UI elements within the app can be separately addressed. This internalID is used by the application software programmer to refer to each UI element.

Each app also has an identifier which identifies the app - this is called the applD. In one implementation the applD is derived from the name and location of the XML code portion of the app in a folder hierarchy. For example, if an XML file "suppliers.xml" was located in a folder "lookups" such that a path of the XML file would be "lookups/suppliers.xml", the applD would be "lookups/suppliers". Since the file name and location will in each case be unique, the applD will also be unique.

Thus, the applD can uniquely identify each app. In typical implementations there will be a large number of apps intended for use in the application - in the order of hundreds or thousands of apps. Thus it is important that each app can properly be addressed.

Each element of the app UI 50 also has an external identifier by which the element can be identified within the browser-based application - this is called the externalID. The externalID comprises a contextID (derived from the context of the app within the user interface of the browser-based application as will be explained below), the applD, the UI element type within the app and the internalID of the UI element itself. Whilst a full description of the whole externalID is given below, a portion of the externalID will initially be introduced.

Whilst, as mentioned above, the applD is derived from the location of the XML code portion of the app in a folder hierarchy, for simplicity in the following discussion, representative applDs will be assigned to apps in the examples. For the app schematically shown in Figure 2 and represented by the XML portion given above, the applD is "app1 ". The element type of field A 52, field B 54 and field C 56 is "field" and the internalID of each element is "A", "B", and "C" respectively.

Thus, ignoring for the time being the contextID, portions of the externalIDs of the three fields are as follows.

| | |
|---|---|
| A: | app1_fieldA |
| B: | app1_fieldB |
| C: | app1_fieldC |

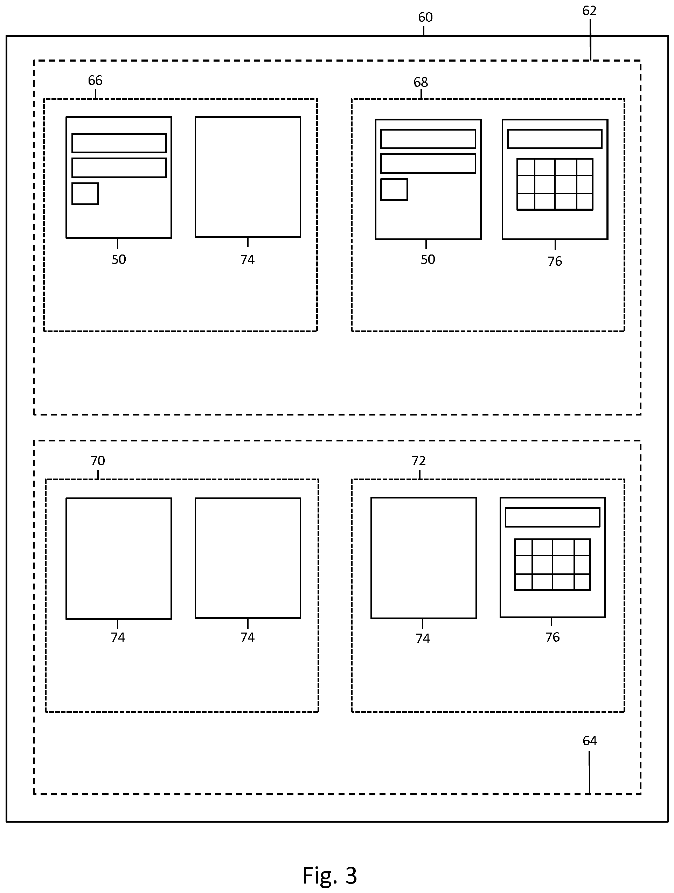

The context of a particular app within the user interface of a browser-based application will now be discussed with reference to Figure 3. A user interface 60 of a browser-based application comprises two dashboard elements: a first dashboard, "dashboard1" 62, and a second dashboard, "dashboard2" 64. A dashboard itself is simply a set of panels each with their own sequentially allocated IDs. The first dashboard 62 comprises a first dashboard panel, "dashboardpanel1" 66 and a second dashboard panel, "dashboardpanel2" 68. The second dashboard 64 comprises a first dashboard panel, "dashboardpanel1" 70 and a second dashboard panel, "dashboardpanel2" 72. Referring again to Figure 3, the first dashboard panel 66 of the first dashboard 62 comprises a first app, here app1 50, and a second app 74. The second dashboard panel 68 of the first dashboard 62 comprises a first app, here app1 50, and a third app 76.

The first and second dashboard panels 70, 72 of the second dashboard 64 also comprise apps 74, 76.

Thus, in the example shown in Figure 3, the first app 50 is shown in two dashboard panels and a third app 76 is also shown in two dashboard panels.

The contextID associated with each of the app UI elements is derived from the hierarchical context of the user interface of the browser-based application in which the respective app is located. Taking app1 50, it can be seen that this app is located within dashboardpanel1 66 of dashboard1 62. Thus, the contextID in this case will be "dashboard1_dashboardpanel1".

The same app, app1 50, is also located in dashboardpanel2 68 of dashboard1 62. The contextID for this second instance of app1 50 will be "dashboard1_dashboardpanel2".

The combination of the contextID and the appID is called the "app state ID" (this is equivalent to the program unit state ID). In the above examples, the app state IDs for the instances of app1 will be "dashboard1_dashboardpanel1_app1" and "dashboard1_dashboardpanel2_app1". Thus, it can be seen that for each app within a particular dashboard panel and for each instance of the same app within different dashboard panels, a unique app state ID can be generated. This allows a unique addressing of each app within the user interface.

Taking these parts together, the externalID of each of the three field elements in app1 50 can be constructed. For the instance of app1 50 in the first dashboard panel 66 of the first dashboard 62, the externalID of each of the three app UI elements is as follows.

| | |
|---|---|
| A: | dashboard1_dashboardpanel1_app1_fieldA |
| B: | dashboard1_dashboardpanel1_app1_fieldB |
| C: | dashboard1_dashboardpanel1_app1_fieldC |

For the instance of app1 50 in the second dashboard panel 68 of the first dashboard 62, the externalIDs are as follows.

| | |
|---|---|
| A: | dashboard1_dashboardpanel2_app1_fieldA |
| B: | dashboard1_dashboardpanel2_app1_fieldB |
| C: | dashboard1_dashboardpanel2_app1_fieldC |

Thus, the construction of the externalID assigned to each UI element of each app allows individual addressing of the element within the user interface of the browser-based application.

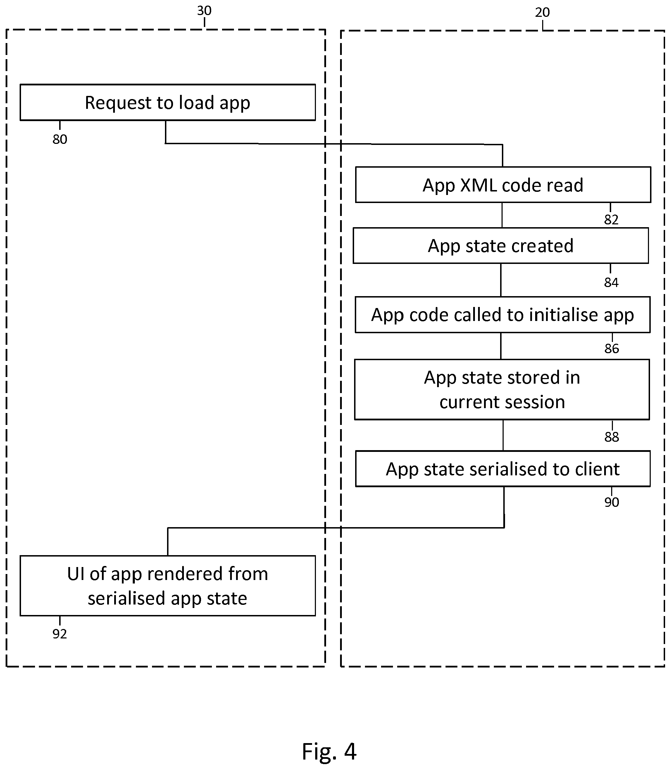

Referring now to Figure 4, a process will be described whereby an app can be loaded, or initialised, in the system. A particular app may be loaded together with other apps on the browser-based application being loaded at the client device 30, or it may be loaded in response to a user action at the client device 30. The client device 30 sends to the server 20 a request to load the app (step 80). The request comprises the appID to identify the app. This request is received at the server 20 and in response the app XML code is read at the server (step 82). An object representing the XML is created at the server (step 84). This object is known as the app state. The app state is an in-memory representation of the UI of the relevant app. The server calls the app code to initialise the app (step 86). In this step the app code portion is read and loaded at the server. The app state object is then stored in the session of the user (step 88). In one implementation the app state is stored in a session in a key which is the app state ID referred to above.

With reference to Figure 3, it can be seen that for app1 50 in the first dashboard panel 66 of the first dashboard 62, the result would be an object stored in the session keyed with "dashboard1_dashboardpanel1_app1." For the second app 76 in the second dashboard panel 68 in the first dashboard 62, the result would be an object stored in the session keyed with "dashboard1_dashboardpanel2_app2." The contextID therefore allows identification of each app state corresponding to each app stored at the server 20.

The server 20 then serialises the app state (i.e. the representation of the app UI) to the client device 30 (step 90). In other words the server 20 sends a set of data to the client device 30 representing the user interface of the app on the basis of which the UI can be rendered at the client device 30. In the present implementation the app state is serialised to the client device 30 as a set of JSON-based data. This comprises the app state ID. The client device 30 receives the serialised app state from the server 20 and renders the UI of the app at the client device 30 (step 92).

The UI of the app rendered at the client device 30 can then receive user interactions via interaction of a user with the client device 30. Such user interaction could be a click event of a mouse, a touch event on a touchscreen device or a text entry event in a text field or other similar interactions as will be apparent to the skilled person.

A process of sending a message from a client device 30 to a server 20 on receipt of a user interaction at the client device 30 will now be described with reference to Figure 5. Whilst the description of the steps shown in Figure 5 will be non-specific, examples will afterwards be given with reference to Figure 2.

A user interaction is received at an app at the client device 30 (step 100). This could be entering data into a form, or checking a checkbox. As a result of the user interaction a message is sent from the client device 30 to the server 20 (step 102). In the present implementation requests are sent to the server 20 to notify it of all the changes. Such notifications are sent from the client device 30 to the server 20 using standard AJAX requests. Such a request can be an XHR request (an XML HTTP Request). This is a request made to the server 20 by a page in the web browser of the client device 30 which uses JavaScript. The request uses the XML HTTP Request object to send the request.

The message (i.e. the XHR request) includes the app state ID of the app and the externalID of the UI element in the app that has been changed. The provision of these IDs as part of the message sent to the server 20 allows the server 20 to identify the current state of the app and to uniquely identify the UI element of the app at the client device 30 to which the user interaction corresponds.

The message also includes the type of event that has occurred, for example a click event, a new value in a text field and so on. The message also includes the new value of a particular field, where appropriate to the user interaction.

For example, in the case where a user types "X" into field A in the app UI shown in Figure 2, then the message sent from the client device 30 to the server 20 will include as the type of event that the user has entered a new value and it will also include the new value itself ("X") together with the relevant app state ID and externalID such that the field into which the new value has been entered can be uniquely identified at the server 20. Where the app has an appID "app1" and the app is located in dashboardpanel1 of dashboard1, the app state ID will be "dashboard1_dashboardpanel1_app1" and the externalID of the modified element is "dashboard1_dashboardpanel1_app1_fieldA".

The app state, i.e. the in-memory representation of the UI of the app at the server, may be created as part of the processing of the request. In the present discussion, the app state is pre-initialised. In other words, the app state already exists, and is restored/retrieved as part of the processing of the request.

Referring again to Figure 5, the message is received at the server 20 in step 104. The server 20 takes the received app state ID and retrieves the app state object from the relevant session (step 106). The server 20 is able to modify the app state object or allow the code portion of the relevant app to modify the app state object.

The attributes of the modified elements within the app state object are an identification of the respective elements, for example by the relevant externalID, and the new value of that element. At step 108 in the process shown in Figure 5, the change state list is created at the server 20. In some implementations, the change state list might already exist so this process step could be omitted. At step 110 the server 20 enables "change detection" on the app state. This means that the server monitors the app state object retrieved as a result of the message received from the client device 30, and monitors any changes made to that app state object. In the present implementation the change state list is an object at the server 20 which is separate from the app state object. The server 20 then calls the relevant app code portion to handle the user interaction (step 112). The running of the app code portion modifies the app state of the app (at step 114) and the changes made to the app state are logged in the change state list (step 116). In other words, modified elements within the app state object are recorded in the change state list. The app code portion and the server itself are able to modify the change state list object.

In the example of Figure 2, the app state object, which represents the current state of the UI of the app, might show that the value of field B is also "X". As mentioned above, the app code portion of the app might set checkbox C to be checked if the values of fields A and B are identical, and to set checkbox C as unchecked if the values of fields A and B are not identical.Thus, in this example, where field B is already "X", and the message received at the server 20 sets field A "X", the app code portion will set field C to be checked. The modification of field C will be recorded in the change state list.

When the message received from the client device 30 has been processed at the server 20, a response is sent from the server 20 back to the client device 30. This response includes data representing the change state list. In this implementation such data included in the response contains the list of externalIDs of the user interface elements that have been modified as a result of the processing, and the new values of these elements. This data is encoded in JSON in the response. The client device 30 receives the response from the server 20 at step 120. At step 122, the client device 30 then applies the UI changes to the user interface of the web browser at the client device 30. In the present implementation this is achieved by the XHR response handler at the client device 30 (i.e. in the web browser) decoding the JSON-encoded data received as part of the response from the server 20, and then updating the respective elements of the UI of the app at the client device 30 based on the externalIDs contained in the response.

With reference to the example app UI shown in Figure 2, the change state list will include the externalID of the modified element "dashboard1_dashboardpanel1_app1_fieldC" and the new value - that it is checked. This information is sent to the client device, which updates the app UI accordingly. The app UI will, in this example, then show the value "X" in both fields A and B, and checkbox C will be checked.

The use of the change state list at the server 20 enables the recordal of the changes made to the app state (i.e. the changes required to be made to the UI of the app at the client device 30). This allows the passing of the change state list to the client device 30, rather than necessitating passing data representing the entirety of the app state to the client device 30. Thus, the response from the server 20 to the client device 30 can include the minimum set of UI changes needed to be made to the UI of the app at the client device 30 in response to the modifications made to the app state at the server 20. This avoids the need to re-serialise the entire UI of the app (or of each app) at the client device 30 as a result of each request or message sent to the server 20. This reduces the amount of data that needs to be sent over the network connecting the server 20 and the client device 30 and reduces the subsequent processing at the client device 30 since a minimum number of changes will then need to be applied at the client device 30.

Taking again the example app UI shown in Figure 2, where the value of field B does not change (it remains "X"), there is no need to re-serialise this element in the response. This element thus retains its value.

As a more specific example of the above-described process, and referring again to Figure 2, the system is flexible in allowing the application software programmer to provide an app code portion which can allow custom handling of events. One such event is the setData event which occurs when, for example, a user changes the value of a field. Such an event can be handled by the application software programmer by providing code as in the following example. In this instance the example code is in the form of C# .NET code.

```
   public override bool setData(Field field, ref dynamic value, ref string error)
   {
     // field = the field being updated
     // value = the value being attempted to be set in the field.
     // error = an error message that can be filled out if an error occurred
     switch (field.ID)
     {
        case "A":
           fields["C"].value = (value == fields["B"].value);
           break;
        case "B":
           fields["C"].value = (value == fields["A"].value);
           break;
     }
     return base.setData(field, ref value, ref error);
   }
```

Referring to Figure 2, the app UI 50 contains text fields A 52 and B 54 and a checkbox C 56. The above code example means that if a user inputs a value into field A 52 then the value of field C 56 is set in consequence of a comparison between the new value of field A 52 and the current value of field B 54. The same is true if the user inputs a new value into field B 54, in that this is compared with the current value of field A 52, and the value of field C 56 is set as a result of the comparison. In this case, if the same value is entered in both field A 52 and field B 54 then the checkbox in field C 56 is checked. If the values in field A 52 and field B 54 are not the same then the checkbox in field C 56 is unchecked.

The "field" object which is passed in the above call is an element in the app state object. As mentioned above the app state object is retrieved at the server 20 during processing of the user interaction (at step 106). Setting the value of this element, or any other field, will update the app state object directly (in other words the app state will be modified - see step 114). Since the server is monitoring changes made to the app state and logging those changes in a change state list (see steps 110 and 116 in Figure 5) the server will record all changes that are relevant to the app state in the change state list.

In the present implementation the change state list is an object that is global to the message received at the server 20. This means that the change state list will record any changes to the app state made as a result of the message. This is irrespective of the code called as a result of the message that leads to the modification of the app state.

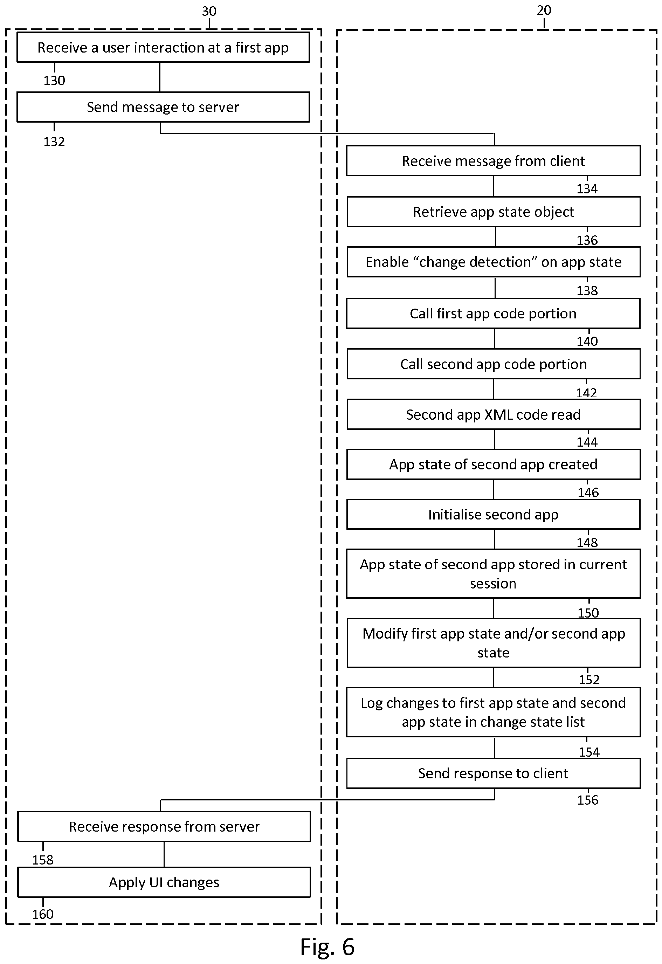

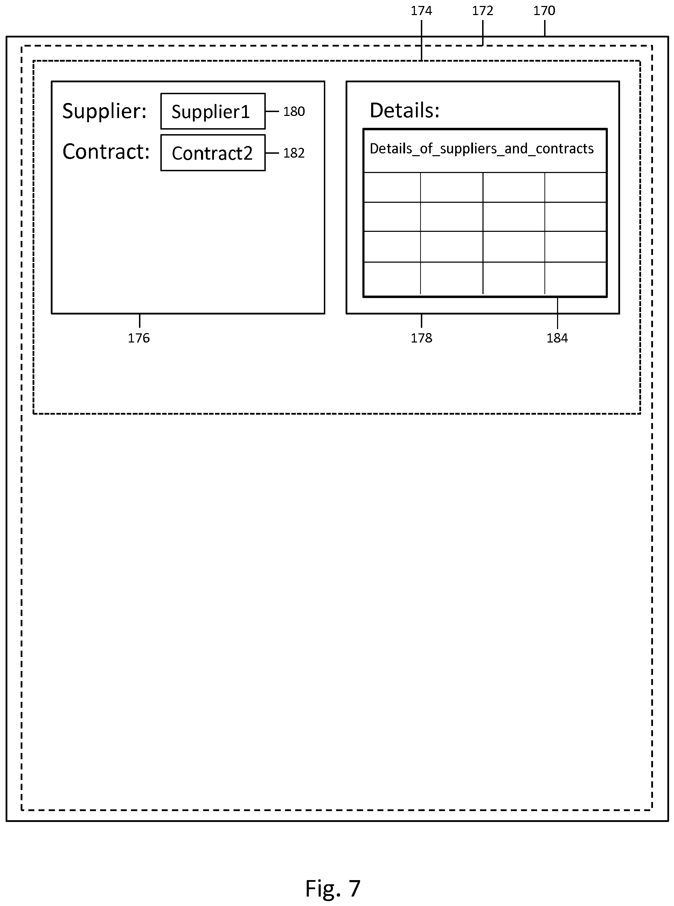

This will be further explained with reference to a process shown in Figure 6. An example of app UI changes according to the process will afterwards be given with reference to Figure 7. As before, a first app at a client device 30 receives an interaction from a user (step 130) which causes the client device 30 to send a message to the server 20 (step 132) including, as before, the app state ID. The message is received at the server 20 (step 134) and the app state object is retrieved (step 136), based on the app state ID received as part of the message. A change state list is created (if one does not already exist) and the server 20 enables "change detection" on the retrieved app state (step 138).

At step 140 the server 20 calls a first app code portion to handle the user interaction. In this instance the first app code portion contains a reference to a second app (or a second app code portion directly) and in response to the call of the first app code portion (step 140), the server 20 calls a second app code portion (step 142).

As a result of the call of the second app code portion (step 142), the server reads the XML code of the second app (step 144), creates the app state of the second app (in other words the in-memory representation of the user interface of the second app - step 146), initialises the second app (step 148) and stores the app state of the second app in the current session (step 150).

Of course, in some examples, the second app may already have been initialised, such that the app state of the second app already exists. In such examples, the app state of the second app is retrieved at this step, in a similar manner to the retrieval of the app state of the first app.

As a result of the call of the first app code portion and the second app code portion (steps 140 and 142) the first app state and/or the second app state is modified (step 152). The changes made to the first app state and the second app state are logged in the change state list (step 154). As mentioned, the change state list is a global list and so it can contain changes made to both the first app and the second app, and similarly changes made as a result of the first app code portion and the second app code portion. At step 156 the server 20 sends a response to the client device 30.

The client device 30 receives the response from the server 20 (at step 158) and applies the UI changes (step 160) as before. However, in this case the UI changes made as a result of the change state list can include changes to both the first and the second app. Thus, rather than requiring separate messages or requests from each of the first and second apps to be made from the client device 30 to the server 20, and corresponding responses sent back from the server 20 to the client device 30, in order to update both of the first and second apps, the present system enables the updating of multiple apps (two apps in this example) as a result of a user interaction received at a first app. In this example a single message is sent from the client device 30 to the server 20 in response to the user interaction and a single response is received back at the client device 30 from the server 20. Since each message/request and response has associated with it certain network overheads - in terms of server load per message, overhead per message before the program unit code portions run, network bandwidth usage and/or processing overhead at both the server 20 and the client device 30 - the reduction in the number of messages needed for achieving a given functionality leads to a network overhead latency saving. This improves efficiency of operation of the system.

Referring now to Figure 7, an example will be given of two different apps running separately within a dashboard in a web browser at a client device 30. The user interface of the web browser 170 comprises a dashboard 172 which comprises a first dashboard panel 174. In instances where only a single dashboard panel is used, the dashboard panel could be omitted and the apps placed directly within the dashboard. However, locating the apps within the dashboard panel allows for the future modification and/or expansion of the system to include additional apps which could then be placed in the same or other dashboard/dashboard panels. The first dashboard panel 174 comprises the user interface of a first app 176 and the user interface of a second app 178.

The user interface of the first app 176 comprises two fields - a supplier field 180 and a contract field 182. The supplier field 180 displays the name and/or other identifier of a supplier. The contract field 182 displays the name and/or other identifier of a contract. The user interface of the second app 178 comprises a details field 184 which consists of a table of data. The first app and the second app are separate program units and run separately within the dashboard.

In one state the supplier field 180 and contract field 182 in the first app are blank. In this state the details field 184 of the second app displays details of all of the suppliers and all of the contracts (within a given database). A user then selects in the table in the details field 184 a data element corresponding to a supplier. This user interaction (step 130 in Figure 6) causes the client device to send a message to the server including the app state ID (for example "dashboard1_dashboardpanel1_app2"), the externalID of the relevant user interface element (for example "dashboard1_dashboardpanel1_app2_fieldDetails") and details relating to the interaction (for example, that a particular value has been selected).

The server receives the message (step 134 in Figure 6) and retrieves the app state object of app2 (step 136 in Figure 6). The code portion of app2 is called (step 140), which causes the code portion of app1 to be called (step 142). The code portions of app1 and app2 modify the app state objects of app1 and app2, for example highlighting the selected element in app2, and modifying the supplier field 180 and contract field 182 in app1 (step 152). These changes are logged in a change state list (step 154) which is sent back to the client device as part of the response (step 156). The client device receives the response and updates the Uls of both app1 and app2 (steps 158 and 160 in Figure 6). As a result, the supplier is shown in the supplier field 180. Where a data element corresponding to a contract is selected in app2, the contract will be shown in the contract field 182.

Similarly if a particular supplier or contract is entered in the supplier field 180 or contract field 182, respectively, in the first app, then only those details relating to that supplier or that contract (as appropriate) will be shown in the details field 184 in the second app.

The name/identifier or other details concerning the supplier and/or contract are amendable in the fields of either the first or second app. The amended details are reflected in the other of the first and second app.

Thus, it can be seen that a user interaction received at one app (here either of the first or second apps) can result in the simultaneous updating of multiple elements in the Uls of multiple apps.

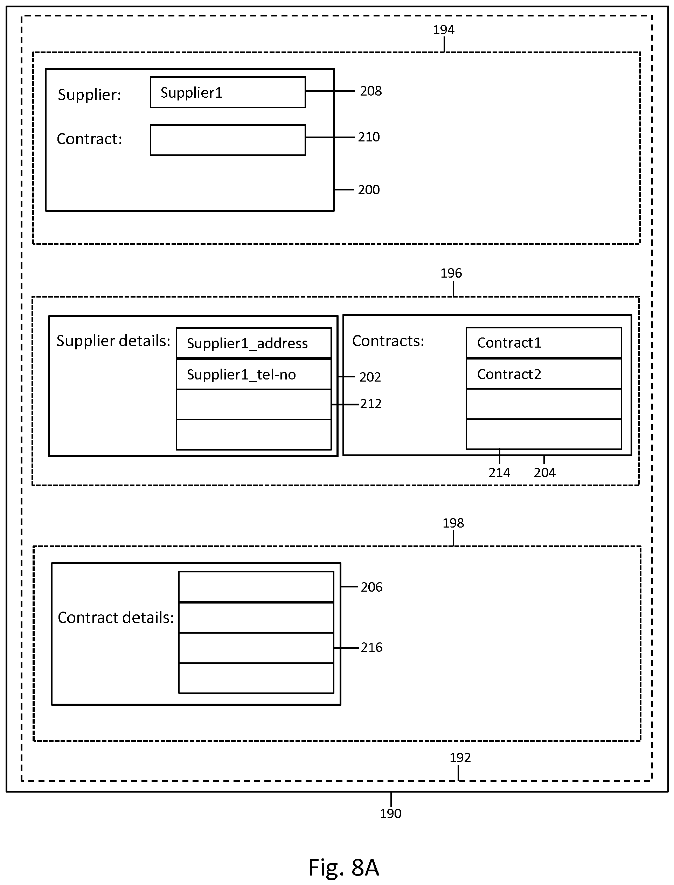

Another example of a potential application of the present system will be described with reference to Figures 8A-8C. These figures show a schematic representation of a user interface of a web browser 190 which comprises a dashboard 192. The dashboard 192 comprises three dashboard panels: a first dashboard panel 194, a second dashboard panel 196 and a third dashboard panel 198. The first dashboard panel 194 comprises the user interface of a first app 200 which comprises a supplier field 208 and a contract field 210. The second dashboard panel 196 comprises the user interface of a second app 202 which comprises a supplier details field 212. The second dashboard panel 196 also comprises the user interface of a third app 204 which comprises a contracts field 214. The third dashboard panel 198 comprises the user interface of a fourth app 206 which comprises a contract details field 216.

In one implementation, the app states of each of the apps are pre-initialised, together with the loading of the dashboard. That is, the program unit state objects for each of the apps will have been created and associated with the user session. At this initial load point, as far as the UI is concerned, the second and third apps will simply present empty fields. Then, when the message resulting from a user interaction with the first app is processed, the existing app states for the second and third apps can be retrieved.

In an alternative implementation, the app states may not be pre-initialised and the app states can be created during processing of the message.

In a first state (shown in Figure 8A) the supplier field 208 in the first app 200 contains the value "Supplier1"; the contract field 210 is blank. The supplier details field 212 in the second app 202 contains details relating to Supplier1. The contracts field 214 in the third app 204 contains details of the contracts associated with Supplier1. The contract details field 216 in the fourth app 206 is blank. This state might have been arrived at by a user entering the value "Supplier1" in the supplier field 208 such that details of the given supplier are shown in the supplier details field 212. As no contract is specified, the remaining fields are blank.

The user may then wish to view details associated with a second supplier. The user can then enter the name of the second supplier (for example "Supplier2") in the supplier field 208. This corresponds to the user interaction received at the client device 30 (step 130 in Figure 6). As a result of this the client device 30 sends a message to the server 20 (step 132). The message includes the app state ID of the first app 200. As mentioned above, the app state ID is constructed based on the context ID and the app ID. In this instance the context ID is "dashboard1_dashboardpanel1" and the app ID is, for example, "app1 ". Thus the app state ID is "dashboard1_dashboardpanel1_app1". The message sent to the server 20 will also include the externalID of the user interface element that is modified. Here the externalID is "dashboard1_dashboardpanel1_app1_fieldSupplier". The message will also include the new value of this user interface element - "Supplier2".

In response to this message, the server 20 will retrieve the app state object for the first app 200 (step 136) and it will enable a "change detection" on this app state (step 138). The server 20 will call the first app code portion to handle the user interaction (step 140). In this instance, the first app code portion will cause a second app code portion (corresponding to the second app 202) and a third app code portion (corresponding to the third app 204) to be called (step 142).

In response to this, the server 20 will retrieve the app state objects for the second and third apps (where they have been pre-initialised). Where the second and third apps have not been pre-initialised, the server 20 will read the XML code associated with the second and third apps and will create a second app state and a third app state which are in-memory representations of the user interface of the second and third apps (steps 144 and 146 in Figure 6). The second and third apps will be initialised such that their code can also be run at the server 20. The app states of the second and third apps will be stored in the session at the server (step 150).

As a result of the processing of the first, second and third app code portions, modifications will be made to each of the first, second and third app states (step 152). The server 20 logs changes to each of the first, second and third app states in the global change state list (step 154).

Once processing has been completed at the server 20 (in other words, once the relevant app states have been modified), the server 20 will send a response to the client device 30 (step 156). This response includes, in this implementation, the change state list which includes the externalIDs of the user interface elements of each of the first, second and third apps that have been modified and the new values to be associated with those user interface elements. This response is received at the client device (step 158) and the user interface changes are applied (step 160). In this way the user interfaces of the first, second and third apps are updated at the client device 30. These updates occur simultaneously.

In this example, the processing of the first, second and third app code portions at the server 20 result in modifications in the second app state and the third app state. In the second app 202, the details in the supplier details field 212 are changed from those relating to Supplier1 to those relating to Supplier2. These details are sent as part of the response to the client device 30 (step 156) including the externalID for this user interface element, which is "dashboard1_dashboardpanel2_app2_fieldSupplierDetails".

The modification made to the third app state is to change the details of the contracts associated with Supplier1 (here Contract1 and Contract2) to those associated with Supplier2 (here Contract1 and Contract4). These details are sent as part of the response together with the externalID for this user interface element, which is "dashboard1_dashboardpanel2_app3_fieldContracts".

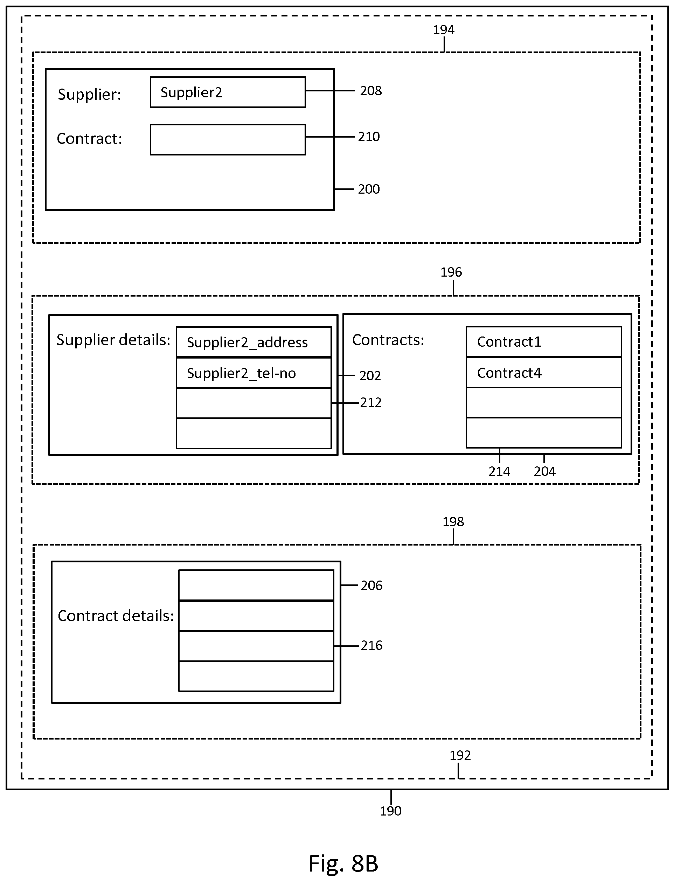

Thus, on receipt by the client device 30 of the response from the server 20 (step 158), the user interface of the web browser 190 will be updated to reflect changes in both the second app 202 and the third app 204 (step 160), as shown in Figure 8B.

The user may then click within the contracts field 214 on the "Contract4" element within that field. The client device 30 will record this as a click event and will pass this user interaction to the server 20 as before. In this case, the user interaction is received in the third app 204 rather than the first app 200. Thus, the app state ID passed as part of the message from the client device 30 to the server 20 will in this case be "dashboard1_dashboardpanel2_app3".

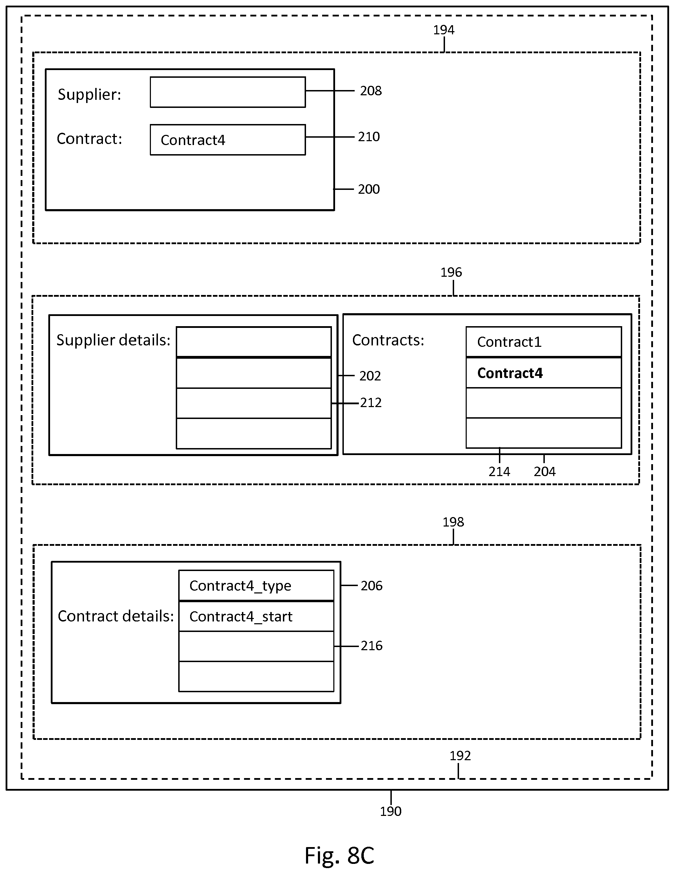

In a similar manner to the process described above, the server 20 will retrieve the app state object for the third app (step 136) and call the associated third app code portion (step 140). The third app code portion will then call the first app code portion, the second app code portion and a fourth app code portion associated with the fourth app 206 (step 142). The processing then carries on in an analogous fashion to the above and results in the modification of the first app state, the second app state, the third app state and the fourth app state. Changes are logged to the global change state list (step 154) and are sent as part of the response to the client device 30 (step 156). As before, the response is received at the client device 30 and the user interface changes are applied. In other words the user interfaces of the first app 200, the second app 202, the third app 204 and the fourth app 206 are updated in response to the received response from the server 20 (step 160). Figure 8C shows a schematic of the user interface of the web browser 190 after the user interfaces of each of the first, second, third and fourth apps have been updated.

In this example, the response will include the value "Contract4" associated with the user interface element identified by the externalID "dashboard1_dashboardpanel1_app1_fieldContract" (i.e. contract field 210). The response also includes the value **"Contract4"** associated with the user interface element identified by the externalID "dashboard1_dashboardpanel2_app3_fieldContracts" (i.e. the contracts field 214). Instead of passing a new value **"Contract4",** the response could simply identify that the relevant element should be changed from normal font to bold font. The response further includes details of Contract4, such as the type of the contract and the start date of the contract, which are associated with the user interface element identified by the externalID "dashboard1_dashboardpanel3_app4_fieldContractDetails" (i.e. contract details field 216).

Again, it will be seen that a user interaction with a single app can result in multiple simultaneous updates across various different apps. In this example the apps are distributed across various dashboard panels within a single dashboard, but equally the apps can be distributed amongst one or more dashboard panels which are themselves distributed among a plurality of dashboards.

In the case where, following a request to the server, and response from the server, one or more elements in an app UI do not change, then values for these elements are not included in the change state list for that request. As mentioned above, only those user interface elements which have been modified during processing at the server 20 are included in the response sent from the server 20 to the client device 30. Thus the response can contain the minimum set of UI changes necessary for the client device 30 to make to the user interface of the web browser 190 in response to the user interaction.

The functionality mentioned above, wherein a call to a first app code portion can result in a call to further app code portions, can be achieved by embedding an app within another app. The app in which another app is embedded can be termed a "container" app. The ability to embed apps within container apps provides a flexible application architecture such that apps can be used in multiple different scenarios and can be "mixed and matched" together to provide the desired functionality. The present techniques offer a system by which such embedded apps can communicate with each other and update app states.

One way in which this can be achieved will now be discussed. If a first app, app1, embeds a second app, app2, then when the app code portion of app1 is called by the server 20, the app code portion of app1 is allowed to make a call to the app code portion of app2. This means that the app state of app2 is restored at the server 20 whilst the app code portion of app2 is executing. As seen above, any app state changes that occur in the app state of app2 will be aggregated together with any app state changes that occur in the app state of app1 in the global change state list. The response from the server 20 to the client device 30 resulting from the message sent by the client device 30 as a result of a user interaction with app1 may therefore contain changes to the user interface of both app1 and app2. Since all user interface elements of the Uls of app1 and app2 have unique externalIDs, the UI states of app1 and app2 can be updated independently within a page at the browser-based application. This updating occurs at the same time.

It is possible to include the app code portion of app2 within the app code portion of app1 such that the app code portion of app2 is executed on execution of the app code portion of app1. This approach will tend to lead to duplication of app code portions since if app2 is embedded in both app1 and app3 (another app), then the app code portion of app2 will be repeated in the app code portion of app1 and the app code portion of app3. This can present challenges when considering the maintenance or updating of the app code portion of app2.

Another approach, as taken in this implementation, is to call app2 from within the app code portion of app1, or in other words to refer to app2 rather than to contain the full app code portion of that app within the container app.

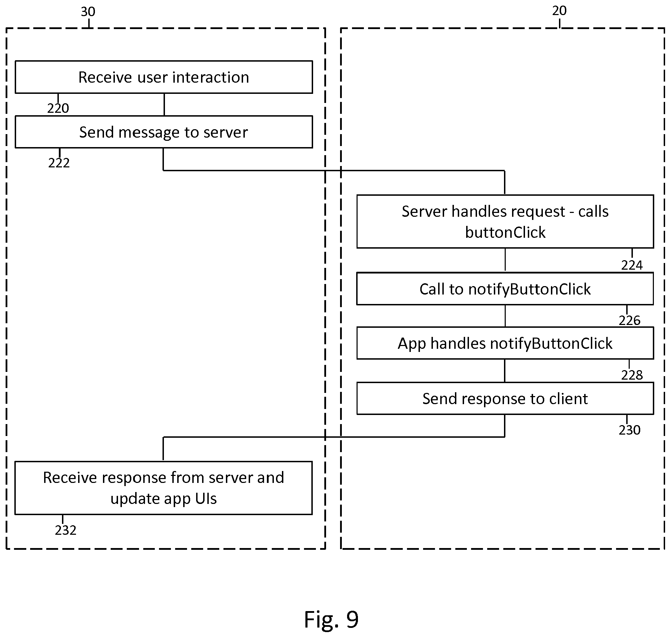

A more specific example of how this might be achieved is given below, and will be discussed with reference to Figure 9. In the following example, app1 is a container app and embeds app2.

XML defining app1 can comprise the following code (see also the example UI shown in Figure 2).

```
 <App title="app1 ">
 <AppCanvas>
 <VLayout>
 <Form margin="5">
   <fields>
    <field ID="A" />
    <field ID="B" />
    <field ID="C" type="checkbox" />
   </fields>
 </Form>
 <Appl ID="app2" appID="app2" title="app2" />
 </VLayout>
 </AppCanvas>
 </App>
```

And XML defining app2 can comprise the following code.

```
<App title="app2">
 <AppCanvas>
 <VLayout>
 <Form margin="5">
   <fields>
    <field ID="A" />
    <field ID="B" />
    <field ID="C" type="button" />
   </fields>
 </Form>
 </VLayout>
 </AppCanvas>
 </App>
```

In this example, app2 contains a button identified as field C.

The app state of an embedded app can include a reference to its parent app (i.e. the container app). Here, the app state of app2 includes a reference to app1. Considering an example, code in the child app (i.e. the embedded app, here app2) can obtain a reference to its parent app using code similar to:
var parent = this.parentApp.GetHandler();

The process by which this occurs is largely specific to the .NET framework, and will be briefly discussed by way of example.

An example of the provision of code that can handle the setData event is given above. This code is, in this example, provided in an ASP.NET .ashx file. An ashx file is normally used to handle http requests (it is a lighter-weight version of a "web form"-based aspx file). The code in the ashx file is actually a .NET Class. This is derived from a standard class in the framework called AppHandler. The AppHandler class deals with the lowest level handling of requests from the browser page, and code in the ashx file handles events by overriding virtual methods defined in the AppHandler class.

A mechanism is provided where an instance of the ashx code can be obtained without the request having being routed to that ashx file in the first place. This is what the GetHandler call mentioned in the example code portion above does. This utilises the ASP.NET System.Web.Compilation.BuildManager.CreateInstanceFromVirtualPath API which, when passed the path to an ashx file, returns an instance of the class defined in the ashx. Public methods of the class defined in the ashx (which include methods defined in the AppHandler base class) can then be called.

It will be appreciated that after the code
var parent = this.parentApp.GetHandler();

it may then call methods on the parent app, e.g.
var parent = this.parentApp.GetHandler();
parent.notifyButtonClicked(this, button);

Here, the first argument of notifyButtonClick is an AppHandler object. Since "this" is being passed, the parent app may then call methods in the app that is calling it, i.e. in the child (embedded) app.

Using this mechanism, in the above application embedding example, when the button (field C) is clicked in app2 (the child, or embedded app) (the user interaction of step 220 in Figure 9), a message is sent from the client device 30 to the server 20 (step 222). The server 20 handles the message in a similar manner to the example processes described above. It calls a buttonClick method in app2 (i.e. app2 code portion) (step 224).

As a result, in this example, app2 sets the value of field B to "X". App2 then calls notifyButtonClick in app1 (at step 226). App1 may choose whether to handle this event. In this example, app1 will handle notifyButtonClick (step 228) and, using the passed AppHandler, which points to app2, obtain the value of field B in app2. App1 may choose to modify its own UI as part of handling the event. Here, app1 sets the value of field B in app1 to that of the value of field B in app2.

As before, changes to the app state of app1 are logged in a change state list at the server 20. Because these changes are recorded in a global change state list they are aggregated with any changes that app2 might have made in the request as well (i.e. to the app state of app2). This change state list is passed to the client device 30 as part of the response from the server 20 (step 230). The Uls of app1 and app2 are then updated at the client device 30 (step 232).

Thus, it will be seen that the single request results in updates occurring in the Uls of both app1 and app2.

In the ASP.NET framework, a message (or request) from the client device 30 to the server 20 is an object (for example a request object) within the framework. There is a processing overhead in setting up and handling such request objects. For the case of app2 embedded in app1, any functionality called within app2 does not result in a new request object, but rather is just an instance within the same request object.

In ASP.NET, a request queuing system can be used, whereby requests are queued and are processed in series, one after another. In some systems, when session blocking occurs, there is a noticeable delay between the processing of requests.

When using ASP.NET, when more than one request seeks write access a particular session object, session blocking may occur. This occurs when a request handler has indicated that it requires write access to the session object (the session object being an intrinsic object provided by ASP.NET).

A simple case of this blocking would be where a user typed in a value into two fields sequentially such that their speed of input exceeds bounding factors such as the available throughput of the network and processing performance of the server. In this case the input into the first field - which will have sent a message to the server - would block the request from the second field from being processed until the first request had completed. The impact of this from a user point of view would be that if input into the second field resulted in some related change to the UI (such as other fields being changed/updated) then those changes will suffer a degree of latency. Such delays can be noticeable to a user.

In one implementation, the default is for the app state to be stored in the session object. Since, as described above, UI events handled by the server can change the app state, clearly the request handlers must indicate that they require write access to the session object. Consequently session blocking latency may be experienced.

However, another implementation provides a secondary mode where the app state is stored in memory (or more specifically "in process" - see below) instead of in the session object. In this mode the request handlers do not require session write access - hence session blocking does not occur.

In this mode, specific to ASP.NET, web requests are themselves threads of a "worker process" managed by ASP.NET/IIS. Session state in this mode is stored in the worker process address space (hence "in process"). If the worker process restarts (as is possible in a variety of circumstances) then all memory in that process, or threads therein, are lost and, by extension, all app state is lost. The session object, in comparison, can (through appropriate configuration) be stored "out of process" meaning it is not stored within the worker process but another process (by default the "ASP.NET Session State Service"). To this end if the worker process is restarted session state is not lost, and hence app state is not lost.

Thus, session app state storage can be slower but is resilient to worker process restarts, whilst in process app state storage can be faster but is less resilient to worker process restarts. The scope of the invention is defined by the appended claims.

## Claims

1. A method for updating a user interface of a second program unit (74) in response to an interaction with a user interface of a first program unit (50), wherein the first and second program units are within an application at a client device (30), wherein the application is arranged to communicate with a server (20) over a network wherein the client device (30) is arranged under the control of software, the method comprising the steps of:
receiving a user interaction at the user interface of the first program unit (50), wherein the user interaction is associated with a first user interface element (52) in the first program unit;
sending a message from the application to the server (20) in response to the user interaction, the message comprising: a first user interface element ID, identifying the first user interface element; a first program unit state ID, identifying the first program unit; and data representing the user interaction;
receiving a response at the application from the server (20), the response comprising data representing a change state list object and including a second user interface element ID, wherein: the second user interface element ID identifies a second user interface element in the second program unit (74); and the change state list object: represents modifications made in dependence on the processing of the user interaction at the server (20) to a second program unit state object which represents the state of the second program unit; and comprises information relating to the state of the second user interface element (74), which information is associated with the second user interface element ID; and
updating the second user interface element in the user interface of the second program unit (74) in response to the received response.

2. A method for updating a user interface of a second program unit (74) in response to an interaction with a user interface of a first program unit (50), wherein the first and second program units are within an application, the application being arranged to communicate with a server (20) over a network, wherein the server (20) is arranged under the control of software, the method comprising the steps of:
receiving a message at the server (20) from the application, the message comprising a first user interface element ID and a first program unit state ID, identifying a first user interface element and a first program unit respectively, and data representing a user interaction received at the application;
accessing at the server (20) a first program unit state object, representing the state of the first program unit, in dependence on the first program unit state ID;
processing the user interaction at the server (20), including running a first program unit code portion, and a second program unit code portion in dependence on the first program unit code portion, the first and second program unit code portions being associated with the first and second program units respectively;
accessing at the server (20) a second program unit state object, representing the state of the second program unit;
modifying at the server (20) the second program unit state object in dependence on the processing of the user interaction;
modifying at the server (20) a change state list object, which represents modifications made in dependence on the processing of the user interaction to the second program unit state object, and comprises information relating to the state of a second user interface element in the second program unit identified by a second user interface element ID, which information is associated with the second user interface element ID; and
sending a response from the server (20) to the application, the response comprising data representing the change state list object and including the second user interface element ID.

3. A method according to claim 1 or claim 2, in which the application is a browser-based application.

4. A method according to claim 1 or claim 3, in which the response further includes the first user interface element ID, and the change state list object further represents modifications made in dependence on the processing of the user interaction to the first program unit state object representing the state of the first program unit and comprises information relating to the state of the first user interface element which is associated with the first user interface element ID, and the method comprises the step of updating the first user interface element in the user interface of the first program unit (50) in response to the received response.

5. A method according to claim 2 or claim 3, comprising the steps of modifying at the server (20) the first program unit state object in dependence on the processing of the user interaction, modifying the change state list object which comprises information relating to the state of the first user interface element which is associated with the first user interface element ID, wherein the step of sending the response comprises sending data representing the change state list object including the first user interface element ID.

6. A method according to any preceding claim, in which information relating to the state of the second user interface element comprises a value or a status indicator, and preferably, in which the message and/or the response is an http request.

7. A method according to any preceding claim, in which the application is a server-oriented large scale application, and/or the application supports application programming to provide custom handling of events within the application, where the application programming is via an application programming interface, and/or the application is a single page application within a web browser at the client device (30).

8. A method according to any preceding claim, in which the application comprises the first and second program units, and/or each program unit comprises a code portion comprising computer program code for coding for a particular functionality of the program unit and a user interface portion comprising computer program code for defining a user interface for the program unit, and/or the first program unit code portion comprises a reference to the second program unit code portion, and preferably, in which the reference is a notification object, which when run causes a notification event to be sent to the second program unit and/or the second program unit code portion.

9. A method according to any preceding claim, in which the application comprises at least one dashboard element, the dashboard element comprising at least one dashboard panel element, with the user interfaces of the first program unit and the second program unit located within the dashboard element and the dashboard panel element.

10. A method according to any preceding claim, in which the user interface element of the first and/or second program unit is associated with an internalID which is internal to the program unit and an externalID which is external to the program unit and comprises a contextID representing the context within the application of the respective program unit, an appID associated with the program unit and the internalID, and/or the first program unit is embedded within the second program unit or the second program unit is embedded within the first program unit such that the state of a user interface element of one program unit can be passed to the other program unit.

11. A method according to any preceding claim, in which the method comprises the step of initialising the first program unit or the second program unit at the server (20), and preferably in which the step of initialising the first program unit or the second program unit at the server (20) comprises the step of creating the first program unit state object or the second program unit state object respectively.

12. A method according to any preceding claim, in which the first program unit state object and/or the second program unit state object is stored in the user session and respectively identified by a first program unit state ID or a second program unit state ID, and preferably, in which the first program unit state ID and/or the second program unit state ID comprises a contextID representing the context within the application of the respective program unit and an appID associated with the program unit, and preferably, in which the method comprises the step of retrieving the first program unit state object and/or the second program unit state object in dependence on the respective first or second program unit state ID.

13. A method according to any preceding claim, in which the method comprises the step of creating the change state list object, and/or the change state list object is global to the server (20), such that it can be modified by the server (20), the first program unit and/or the second program unit.

14. A method for updating a user interface of a second program unit (74) in response to an interaction with a user interface of a first program unit (50), wherein the first and second program units are within an application wherein the application is arranged to communicate with a server (20) over a network, the method comprising the steps of:
receiving a user interaction at the user interface of the first program unit (50), wherein the user interaction is associated with a first user interface element in the first program unit;
sending a message from the application to the server (20) in response to the user interaction, the message comprising: a first user interface element ID, identifying the first user interface element; and a first program unit state ID, identifying the first user interface element and the first program unit respectively, and data representing the user interaction;
receiving the message at the server (20);
accessing at the server (20) a first program unit state object, representing the state of the first program unit, in dependence on the first program unit state ID;
processing the user interaction at the server (20), including running a first program unit code portion, and a second program unit code portion in dependence on the first program unit code portion, the first and second program unit code portions being associated with the first and second program units respectively;
accessing at the server (20) a second program unit state object, representing the state of the second program unit;
modifying at the server (20) the second program unit state object in dependence on the processing of the user interaction;
modifying at the server (20) a change state list object, which represents modifications made in dependence on the processing of the user interaction to the second program unit state object, and comprises information relating to the state of a second user interface element in the second program unit identified by a second user interface element ID, which information is associated with the second user interface element ID;
sending a response from the server (20) to the application, the response comprising data representing the change state list object and including the second user interface element ID;
receiving the response at the application; and
updating the second user interface element in the user interface of the second program unit (74) in response to the received response to the user interaction.

15. A computing device configured to operate as a client device (30) comprising an application for use in a method for updating a user interface of a second program unit (74) in response to an interaction with a user interface of a first program unit (50) in the application, wherein the first and second program units are within the application, wherein the application is arranged to communicate with a server (20) over a network, the client device (30) being arranged under the control of software to:
receive a user interaction at the user interface of the first program unit (50), wherein the user interaction is associated with a first user interface element in the first program unit;
send a message from the application to the server (20) in response to the user interaction, the message comprising a first user interface element ID and a first program unit state ID, identifying the first user interface element and the first program unit respectively, and data representing the user interaction;
receive a response at the application from the server (20), the response comprising data representing a change state list object and including a second user interface element ID, the second user interface element ID identifying a second user interface element in the second program unit, wherein the change state list object represents modifications made in dependence on the processing of the user interaction at the server (20) to a second program unit state object which represents the state of the second program unit, and comprises information relating to the state of the second user interface element, which information is associated with the second user interface element ID; and
update the second user interface element in the user interface of the second program unit (74) in response to the received response.

16. A computing device configured to operate as a server (20) for use in a method for updating a user interface of a second program unit (74) in response to an interaction with a user interface of a first program unit (50), wherein the first and second program units are within in an application, the server (20) being arranged to communicate with the application over a network, the server (20) being arranged under the control of software to:
receive a message at the server (20) from the application, the message comprising a first user interface element ID and a first program unit state ID, identifying a first user interface element and a first program unit respectively, and data representing a user interaction received at the application;
access at the server (20) a first program unit state object, representing the state of the first program unit, in dependence on the first program unit state ID;
process the user interaction at the server (20), including running a first program unit code portion, and a second program unit code portion in dependence on the first program unit code portion, the first and second program unit code portions being associated with the first and second program units respectively;
access at the server (20) a second program unit state object, representing the state of the second program unit;
modify at the server (20) the second program unit state object in dependence on the processing of the user interaction;
modify at the server (20) a change state list object, which represents modifications made in dependence on the processing of the user interaction to the second program unit state object, and comprises information relating to the state of a second user interface element in the second program unit identified by a second user interface element ID, which information is associated with the second user interface element ID; and
send a response from the server (20) to the application, the response comprising data representing the change state list object and including the second user interface element ID.

## Patentansprüche

1. Verfahren zum Aktualisieren einer Benutzeroberfläche einer zweiten Programmeinheit (74) als Reaktion auf eine Interaktion mit einer Benutzeroberfläche einer ersten Programmeinheit (50), wobei sich die erste und die zweite Programmeinheit innerhalb einer Anwendung an einer Clientvorrichtung (30) befinden, wobei die Anwendung eingerichtet ist, um mit einem Server (20) über ein Netzwerk zu kommunizieren, wobei die Clientvorrichtung (30) unter der Steuerung von Software eingerichtet ist, wobei das Verfahren die folgenden Schritte umfasst:
Empfangen einer Benutzerinteraktion an der Benutzeroberfläche der ersten Programmeinheit (50), wobei die Benutzerinteraktion einem ersten Benutzeroberflächenelement (52) in der ersten Programmeinheit zugehörig ist;
Senden einer Nachricht von der Anwendung an den Server (20) als Reaktion auf die Benutzerinteraktion, wobei die Nachricht Folgendes umfasst:
eine erste Benutzeroberflächenelement-ID, die das erste Benutzeroberflächenelement identifiziert;
eine erste Programmeinheitszustands-ID, die die erste Programmeinheit identifiziert; und
Daten, die die Benutzerinteraktion darstellen;
Empfangen einer Reaktion an der Anwendung von dem Server (20), wobei die Reaktion Daten umfasst, die ein Änderungszustandslistenobjekt darstellen und eine zweite Benutzeroberflächenelement-ID einschließen, wobei:
die zweite Benutzeroberflächenelement-ID ein zweites Benutzeroberflächenelement in der zweiten Programmeinheit (74) identifiziert; und
das Änderungszustandslistenobjekt:
Änderungen darstellt, die in Abhängigkeit von der Verarbeitung der Benutzerinteraktion an dem Server (20) an einem zweiten Programmeinheitszustandsobjekt vorgenommen wurden, das den Zustand der zweiten Programmeinheit darstellt; und
Informationen umfasst, die sich auf den Zustand des zweiten Benutzeroberflächenelements (74) beziehen, wobei diese Informationen der zweiten Benutzeroberflächenelement-ID zugehörig sind; und
Aktualisieren des zweiten Benutzeroberflächenelements in der Benutzeroberfläche der zweiten Programmeinheit (74) als Reaktion auf die empfangene Reaktion.

2. Verfahren zum Aktualisieren einer Benutzeroberfläche einer zweiten Programmeinheit (74) als Reaktion auf eine Interaktion mit einer Benutzeroberfläche einer ersten Programmeinheit (50), wobei sich die erste und die zweite Programmeinheit innerhalb einer Anwendung befinden, wobei die Anwendung eingerichtet ist, um mit einem Server (20) über ein Netzwerk zu kommunizieren, wobei der Server (20) unter der Steuerung von Software eingerichtet ist, wobei das Verfahren die folgenden Schritte umfasst:
Empfangen einer Nachricht an dem Server (20) von der Anwendung, wobei die Nachricht eine erste Benutzeroberflächenelement-ID und eine erste Programmeinheitszustands-ID, die ein erstes Benutzeroberflächenelement bzw. eine erste Programmeinheit identifizieren, und Daten umfasst, die eine an der Anwendung empfangene Benutzerinteraktion darstellen;
Zugreifen auf ein erstes Programmeinheitszustandsobjekt an dem Server (20), das den Zustand der ersten Programmeinheit in Abhängigkeit von der ersten Programmeinheitszustands-ID darstellt;
Verarbeiten der Benutzerinteraktion an dem Server (20), einschließlich Ausführen eines ersten Programmeinheitscodeabschnitts und eines zweiten Programmeinheitscodeabschnitts in Abhängigkeit von dem ersten Programmeinheitscodeabschnitt, wobei der erste und der zweite Programmeinheitscodeabschnitt der ersten bzw. zweiten Programmeinheit zugehörig sind;
Zugreifen an dem Server (20) auf ein zweites Programmeinheitszustandsobjekt, das den Zustand der zweiten Programmeinheit darstellt;
Ändern des zweiten Programmeinheitszustandsobjekts an dem Server (20) in Abhängigkeit von der Verarbeitung der Benutzerinteraktion;
Ändern eines Änderungszustandslistenobjekts an dem Server (20), das Änderungen darstellt, die in Abhängigkeit von der Verarbeitung der Benutzerinteraktion an dem zweiten Programmeinheitszustandsobjekt vorgenommen wurden, und Informationen umfasst, die sich auf den Zustand eines zweiten Benutzeroberflächenelements in der zweiten Programmeinheit beziehen, die durch eine zweite Benutzeroberflächenelement-ID identifiziert wird, wobei diese Informationen der zweiten Benutzeroberflächenelement-ID zugehörig sind; und
Senden einer Reaktion von dem Server (20) an die Anwendung, wobei die Reaktion Daten umfasst, die das Änderungszustandslistenobjekt darstellen und die zweite Benutzeroberflächenelement-ID einschließen.

3. Verfahren nach Anspruch 1 oder 2, wobei die Anwendung eine browser-basierte Anwendung ist.

4. Verfahren nach Anspruch 1 oder 3, wobei die Reaktion ferner die erste Benutzeroberflächenelement-ID einschließt und das Änderungszustandslistenobjekt ferner Änderungen darstellt, die in Abhängigkeit von der Verarbeitung der Benutzerinteraktion an dem ersten Programmeinheitszustandsobjekt vorgenommen werden, das den Zustand der ersten Programmeinheit darstellt und Informationenen, die sich auf den Zustand des ersten Benutzeroberflächenelements beziehen, umfasst, das der ersten Benutzeroberflächenelement-ID zugehörig ist, und wobei das Verfahren den Schritt des Aktualisierens des ersten Benutzeroberflächenelements in der Benutzeroberfläche der ersten Programmeinheit (50) als Reaktion auf die empfangene Reaktion umfasst.

5. Verfahren nach Anspruch 2 oder 3, das die Schritte des Änderns an dem Server (20) des ersten Programmeinheitszustandsobjekts in Abhängigkeit von der Verarbeitung der Benutzerinteraktion, des Änderns des Änderungszustandslistenobjekts, das Information, die sich auf den Zustand des ersten Benutzeroberflächenelements beziehen, umfasst, das der ersten Benutzeroberflächenelement-ID zugehörig ist, umfasst, wobei der Schritt des Sendens der Reaktion das Senden von Daten umfasst, die das Änderungszustandslistenobjekt einschließlich der ersten Benutzeroberflächenelement-ID darstellen.

6. Verfahren nach einem der vorhergehenden Ansprüche, wobei Informationen, die sich auf den Zustand des zweiten Benutzeroberflächenelementes beziehen, einen Wert oder einen Zustandsindikator umfassen, und vorzugsweise, wobei die Meldung und/oder die Reaktion eine HTTP-Anforderung ist.

7. Verfahren nach einem der vorhergehenden Ansprüche, wobei die Anwendung eine serverorientierte Großanwendung ist und/oder die Anwendung die Anwendungsprogrammierung unterstützt, um ein benutzerdefiniertes Behandeln von Ereignissen innerhalb der Anwendung bereitzustellen, wobei die Anwendungsprogrammierung über eine Anwendungsprogrammierungsschnittstelle erfolgt und/oder die Anwendung eine einseitige Anwendung innerhalb eines Webbrowsers auf der Clientvorrichtung (30) ist.

8. Verfahren nach einem der vorhergehenden Ansprüche, wobei die Anwendung die erste und die zweite Programmeinheit umfasst, und/oder jede Programmeinheit einen Codeabschnitt, umfassend Computerprogrammcode zum Codieren für eine bestimmte Funktionalität der Programmeinheit, und einen Benutzeroberflächenabschnitt, der einen Computerprogrammcode zum Definieren einer Benutzeroberfläche für die Programmeinheit umfasst, umfasst, und/oder wobei der erste Programmeinheitscodeabschnitt einen Verweis auf den zweiten Programmeinheitscodeabschnitt umfasst, und vorzugsweise, wobei der Verweis ein Benachrichtigungsobjekt ist, das beim Ausführen bewirkt, dass ein Benachrichtigungsereignis an die zweite Programmeinheit und/oder den Codeabschnitt der zweiten Programmeinheit gesendet wird.

9. Verfahren nach einem der vorhergehenden Ansprüche, wobei die Anwendung mindestens ein Dashboardelement umfasst, wobei das Dashboardelement mindestens ein Dashboardpanelelement umfasst, wobei die Benutzeroberflächen der ersten Programmeinheit und der zweiten Programmeinheit innerhalb des Dashboadelements und des Dashboardpanelelements gelegen sind.

10. Verfahren nach einem der vorhergehenden Ansprüche, wobei das Benutzeroberflächenelement der ersten und/oder der zweiten Programmeinheit einer internen ID, die der Programmeinheit inneliegt, und einer externen ID zugehörig ist, die außerhalb der Programmeinheit liegt und eine Kontext-ID, die den Kontext innerhalb der Anwendung der jeweiligen Programmeinheit darstellt, und eine der Programmeinheit und der internen ID zugehörige App-ID umfasst, und/oder wobei die erste Programmeinheit in die zweite Programmeinheit eingebettet ist oder die zweite Programmeinheit in die erste Programmeinheit eingebettet ist, derart, dass der Zustand eines Benutzeroberflächenelements einer Programmeinheit an die andere Programmeinheit weitergegeben werden kann.

11. Verfahren nach einem der vorhergehenden Ansprüche, wobei das Verfahren den Schritt des Initialisierens der ersten Programmeinheit oder der zweiten Programmeinheit an dem Server (20) umfasst, und vorzugsweise wobei der Schritt des Initialisierens der ersten Programmeinheit oder der zweiten Programmeinheit an dem Server (20) den Schritt des Erzeugens des ersten Programmeinheitszustandsobjekts bzw. des zweiten Programmeinheitszustandsobjekts umfasst.

12. Verfahren nach einem der vorhergehenden Ansprüche, wobei das erste Programmeinheitszustandsobjekt und/oder das zweite Programmeinheitszustandsobjekt in der Benutzersitzung gespeichert ist und jeweils von einer ersten Programmeinheitszustands-ID oder einer zweiten Programmeinheitszustands-ID identifiziert wird, und vorzugsweise, wobei die erste Programmeinheitszustands-ID und/oder die zweite Programmeinheitszustands-ID eine Kontext-ID, die den Kontext innerhalb der Anwendung der jeweiligen Programmeinheit darstellt, und eine der Programmeinheit zugehörige App-ID umfasst, und vorzugsweise, wobei das Verfahren den Schritt des Abrufens des ersten Programmeinheitszustandsobjekts und/oder des zweiten Programmeinheitszustandsobjekts in Abhängigkeit von der ersten bzw. der zweiten Programmeinheitszustands-ID umfasst.

13. Verfahren nach einem der vorhergehenden Ansprüche, wobei das Verfahren den Schritt des Erzeugens des Änderungszustandslistenobjekts umfasst, und/oder das Änderungszustandslistenobjekt global für den Server (20) ist, derart, dass es durch den Server (20), die erste Programmeinheit und/oder die zweite Programmeinheit geändert werden kann.

14. Verfahren zum Aktualisieren einer Benutzeroberfläche einer zweiten Programmeinheit (74) als Reaktion auf eine Interaktion mit einer Benutzeroberfläche einer ersten Programmeinheit (50), wobei die erste und die zweite Programmeinheit sich innerhalb einer Anwendung befinden, wobei die Anwendung eingerichtet ist, um mit einem Server (20) über ein Netzwerk zu kommunizieren, wobei das Verfahren die folgenden Schritte umfasst:
Empfangen einer Benutzerinteraktion an der Benutzeroberfläche der ersten Programmeinheit (50), wobei die Benutzerinteraktion einem ersten Benutzeroberflächenelement in der ersten Programmeinheit zugehörig ist;
Senden einer Nachricht von der Anwendung an den Server (20) als Reaktion auf die Benutzerinteraktion, wobei die Nachricht Folgendes umfasst:
eine erste Benutzeroberflächenelement-ID, die das erste Benutzeroberflächenelement identifiziert; und
eine erste Programmeinheitszustands-ID, die das erste Benutzeroberflächenelement bzw. die erste Programmeinheit identifiziert, und Daten, die die Benutzerinteraktion darstellen;
Empfangen der Nachricht an dem Server (20);
Zugreifen auf ein erstes Programmeinheitszustandsobjekt an dem Server (20), das den Zustand der ersten Programmeinheit in Abhängigkeit von der ersten Programmeinheitszustands-ID darstellt;
Verarbeiten der Benutzerinteraktion an dem Server (20), einschließlich Ausführen eines ersten Programmeinheitcodeabschnitts und eines zweiten Programmeinheitscodeabschnitts in Abhängigkeit von dem ersten Programmeinheitscodeabschnitt, wobei der erste und der zweite Programmeinheitscodeabschnitt der ersten bzw. zweiten Programmeinheit zugehörig sind;
Zugreifen an dem Server (20) auf ein zweites Programmeinheitszustandsobjekt, das den Zustand der zweiten Programmeinheit darstellt;
Ändern des zweiten Programmeinheitszustandsobjekts an dem Server (20) in Abhängigkeit von der Verarbeitung der Benutzerinteraktion;
Ändern eines Änderungszustandslistenobjekts an dem Server (20), das Änderungen darstellt, die in Abhängigkeit von der Verarbeitung der Benutzerinteraktion an dem zweiten Programmeinheitszustandsobjekt vorgenommen wurden, und Informationen umfasst, die sich auf den Zustand eines zweiten Benutzeroberflächenelements in der zweiten Programmeinheit beziehen, die durch eine zweite Benutzeroberflächenelement-ID identifiziert wird, wobei diese Informationen der zweiten Benutzeroberflächenelement-ID zugehörig sind;
Senden einer Reaktion von dem Server (20) an die Anwendung, wobei die Reaktion Daten umfasst, die das Änderungszustandslistenobjekt darstellen und die zweite Benutzeroberflächenelement-ID einschließen;
Empfangen der Reaktion an der Anwendung; und
Aktualisieren des zweiten Benutzeroberflächenelements in der Benutzeroberfläche der zweiten Programmeinheit (74) als Reaktion auf die empfangene Reaktion auf die Benutzerinteraktion.

15. Rechenvorrichtung, die zum Betrieb als eine Clientvorrichtung (30) konfiguriert ist und eine Anwendung zur Verwendung in einem Verfahren zum Aktualisieren einer Benutzeroberfläche einer zweiten Programmeinheit (74) als Reaktion auf eine Interaktion mit einer Benutzeroberfläche einer ersten Programmeinheit (50) in der Anwendung umfasst, wobei sich die erste und die zweite Programmeinheit innerhalb der Anwendung befinden, wobei die Anwendung eingerichtet ist, um mit einem Server (20) über ein Netzwerk zu kommunizieren, wobei die Clientvorrichtung (30) unter der Steuerung von Software eingerichtet ist, um:
einer Benutzerinteraktion an der Benutzeroberfläche der ersten Programmeinheit (50) zu empfangen, wobei die Benutzerinteraktion einem ersten Benutzeroberflächenelement in der ersten Programmeinheit zugehörig ist;
eine Nachricht von der Anwendung an den Server (20) als Reaktion auf die Benutzerinteraktion zu senden, wobei die Nachricht eine erste Benutzeroberflächenelement-ID und eine erste Programmeinheitszustands-ID umfasst, die das erste Benutzeroberflächenelement bzw. die erste Programmeinheit identifizieren, und Daten, die die Benutzerinteraktion darstellen;
eine Reaktion an der Anwendung von dem Server (20) zu empfangen, wobei die Reaktion Daten umfasst, die ein Änderungszustandslistenobjekt darstellen und eine zweite Benutzeroberflächenelement-ID einschließen, wobei die zweite Benutzeroberflächenelement-ID ein zweites Benutzeroberflächenelement in der zweiten Programmeinheit identifiziert, wobei das Änderungszustandslistenobjekt Änderungen darstellt, die in Abhängigkeit von der Verarbeitung der Benutzerinteraktion an dem Server (20) an einem zweiten Programmeinheitszustandsobjekt vorgenommen wurden, das den Zustand der zweiten Programmeinheit darstellt, und Informationen, die sich auf den Zustand des zweiten Benutzeroberflächenelements beziehen, umfasst, wobei die Informationen der zweiten Benutzeroberflächenelement-ID zugehörig sind; und
das zweite Benutzeroberflächenelement in der Benutzeroberfläche der zweiten Programmeinheit (74) als Reaktion auf die empfangene Reaktion zu aktualisieren.

16. Rechenvorrichtung, die konfiguriert ist, um als ein Server (20) zur Verwendung in einem Verfahren zum Aktualisieren einer Benutzeroberfläche einer zweiten Programmeinheit (74) als Reaktion auf eine Interaktion mit einer Benutzeroberfläche einer ersten Programmeinheit (50) zu arbeiten, wobei sich die erste und die zweite Programmeinheit innerhalb einer Anwendung befinden, wobei der Server (20) eingerichtet ist, um mit der Anwendung über ein Netzwerk zu kommunizieren, wobei der Server (20) unter der Steuerung von Software eingerichtet ist, um:
eine Nachricht an dem Server (20) von der Anwendung zu empfangen, wobei die Nachricht eine erste Benutzeroberflächenelement-ID und eine erste Programmeinheitszustands-ID, die ein erstes Benutzeroberflächenelement bzw. eine erste Programmeinheit identifizieren, und Daten umfasst, die eine an der Anwendung empfangene Benutzerinteraktion darstellen;
auf ein erstes Programmeinheitszustandsobjekt an dem Server (20) zuzugreifen, das den Zustand der ersten Programmeinheit in Abhängigkeit von der ersten Programmeinheitszustands-ID darstellt;
die Benutzerinteraktion an dem Server (20) zu verarbeiten, einschließlich Ausführen eines ersten Programmeinheitscodeabschnitts und eines zweiten Programmeinheitscodeabschnitts in Abhängigkeit von dem ersten Programmeinheitscodeabschnitt, wobei der erste und der zweite Programmeinheitscodeabschnitt der ersten bzw. der zweiten Programmeinheit zugehörig sind;
auf ein zweites Programmeinheitszustandsobjekt an dem Server (20) zuzugreifen, das den Zustand der zweiten Programmeinheit darstellt;
an dem Server (20) das zweite Programmeinheitszustandsobjekt in Abhängigkeit von der Verarbeitung der Benutzerinteraktion zu ändern;
an dem Server (20) ein Änderungszustandslistenobjekt zu ändern, das in Abhängigkeit von der Verarbeitung der Benutzerinteraktion an dem zweiten Programmeinheitszustandsobjekt vorgenommene Änderungen darstellt und Informationen, die sich auf den Zustand eines zweiten Benutzeroberflächenelements in der zweiten Programmeinheit beziehen, umfasst, die durch eine zweite Benutzeroberflächenelement-ID identifiziert wird, wobei diese Information der zweiten Benutzeroberflächenelement-ID zugehörig ist; und
eine Reaktion von dem Server (20) an die Anwendung zu senden, wobei die Reaktion Daten umfasst, die das Änderungszustandslistenobjekt darstellen und die zweite Benutzeroberflächenelement-ID einschließen.

## Revendications

1. Procédé de mise à jour d'une interface utilisateur d'une seconde unité de programme (74) en réponse à une interaction avec une interface utilisateur d'une première unité de programme (50), dans lequel les première et seconde unités de programme sont situées dans une application au niveau d'un dispositif client (30), dans lequel l'application est agencée de manière à communiquer avec un serveur (20) sur un réseau dans lequel le dispositif client (30) est agencé sous la commande d'un logiciel, le procédé comprenant les étapes ci-dessous consistant à :
recevoir une interaction d'utilisateur au niveau de l'interface utilisateur de la première unité de programme (50), dans lequel l'interaction d'utilisateur est associée à un premier élément d'interface utilisateur (52) dans la première unité de programme ;
envoyer un message, de l'application au serveur (20), en réponse à l'interaction d'utilisateur, le message comprenant : un premier identificateur, ID, d'élément d'interface utilisateur, identifiant le premier élément d'interface utilisateur ; un premier identificateur d'état d'unité de programme, identifiant la première unité de programme ; et des données représentant l'interaction d'utilisateur ;
recevoir une réponse, au niveau de l'application, en provenance du serveur (20), la réponse comprenant des données représentant un objet de liste d'états de modifications et incluant un second identificateur d'élément d'interface utilisateur, dans lequel : le second identificateur d'élément d'interface utilisateur identifie un second élément d'interface utilisateur dans la seconde unité de programme (74) ; et l'objet de liste d'états de modifications : représente des modifications apportées, en fonction du traitement de l'interaction d'utilisateur au niveau du serveur (20), à un second objet d'état d'unité de programme qui représente l'état de la seconde unité de programme ; et comprend des informations relatives à l'état du second élément d'interface utilisateur (74), lesquelles informations sont associées au second identificateur d'élément d'interface utilisateur ; et
mettre à jour le second élément d'interface utilisateur dans l'interface utilisateur de la seconde unité de programme (74) en réponse à la réponse reçue.

2. Procédé de mise à jour d'une interface utilisateur d'une seconde unité de programme (74) en réponse à une interaction avec une interface utilisateur d'une première unité de programme (50), dans lequel les première et seconde unités de programme sont situées dans une application, l'application étant agencée de manière à communiquer avec un serveur (20) sur un réseau, dans lequel le serveur (20) est agencé sous la commande d'un logiciel, le procédé comprenant les étapes ci-dessous consistant à :
recevoir un message au niveau du serveur (20), en provenance de l'application, le message comprenant un premier identificateur d'élément d'interface utilisateur et un premier identificateur d'état d'unité de programme, identifiant un premier élément d'interface utilisateur et une première unité de programme, respectivement, et des données représentant une interaction d'utilisateur, reçues au niveau de l'application ;
accéder, au niveau du serveur (20), à un premier objet d'état d'unité de programme, représentant l'état de la première unité de programme, en fonction du premier identificateur d'état d'unité de programme ;
traiter l'interaction d'utilisateur au niveau du serveur (20), et notamment exécuter une première partie de code d'unité de programme, et une seconde partie de code d'unité de programme en fonction de la première partie de code d'unité de programme, les première et seconde parties de code d'unités de programme étant associées aux première et seconde unités de programme, respectivement ;
accéder, au niveau du serveur (20), à un second objet d'état d'unité de programme, représentant l'état de la seconde unité de programme ;
modifier, au niveau du serveur (20), le second objet d'état d'unité de programme, en fonction du traitement de l'interaction d'utilisateur ;
modifier, au niveau du serveur (20), un objet de liste d'états de modifications, qui représente des modifications, apportées en fonction du traitement de l'interaction d'utilisateur, au second objet d'état d'unité de programme, et comprend des informations relatives à l'état d'un second élément d'interface utilisateur dans la seconde unité de programme, identifié par un second identificateur d'élément d'interface utilisateur, lesquelles informations sont associées au second identificateur d'élément d'interface utilisateur ; et
envoyer une réponse, du serveur (20) à l'application, la réponse comprenant des données représentant l'objet de liste d'états de modifications et incluant le second identificateur d'élément d'interface utilisateur.

3. Procédé selon la revendication 1 ou 2, dans lequel l'application est une application basée sur un navigateur.

4. Procédé selon la revendication 1 ou 3, dans lequel la réponse inclut en outre le premier identificateur d'élément d'interface utilisateur, et l'objet de liste d'états de modifications représente en outre des modifications, apportées en fonction du traitement de l'interaction d'utilisateur, au premier objet d'état d'unité de programme, représentant l'état de la première unité de programme, et comprend des informations relatives à l'état du premier élément d'interface utilisateur qui sont associées au premier identificateur d'élément d'interface utilisateur, et dans lequel le procédé comprend l'étape consistant à mettre à jour le premier élément d'interface utilisateur dans l'interface utilisateur de la première unité de programme (50), en réponse à la réponse reçue.

5. Procédé selon la revendication 2 ou 3, comprenant les étapes consistant à modifier, au niveau du serveur (20), le premier objet d'état d'unité de programme en fonction du traitement de l'interaction d'utilisateur, et à modifier l'objet de liste d'états de modifications qui comprend des informations relatives à l'état du premier élément d'interface utilisateur qui sont associées au premier identificateur d'élément d'interface utilisateur, dans lequel l'étape d'envoi de la réponse consiste à envoyer des données représentant l'objet de liste d'états de modifications incluant le premier identificateur d'élément d'interface utilisateur.

6. Procédé selon l'une quelconque des revendications précédentes, dans lequel des informations relatives à l'état du second élément d'interface utilisateur comprennent une valeur ou un indicateur d'état, et de préférence, dans lequel le message et/ou la réponse est une requête HTTP.

7. Procédé selon l'une quelconque des revendications précédentes, dans lequel l'application est une application à grande échelle orientée serveur et/ou l'application prend en charge une programmation d'application pour fournir une gestion personnalisée d'événements au sein de l'application, où la programmation d'application a lieu par l'intermédiaire d'une interface de programmation d'application, et/ou l'application est une application de page unique dans un navigateur web au niveau du dispositif client (30).

8. Procédé selon l'une quelconque des revendications précédentes, dans lequel l'application comprend les première et seconde unités de programme, et/ou chaque unité de programme comprend une partie de code comprenant un code de programme informatique pour coder une fonctionnalité spécifique de l'unité de programme, et une partie d'interface utilisateur comprenant un code de programme informatique pour définir une interface utilisateur pour l'unité de programme, et/ou la première partie de code d'unité de programme comprend une référence à la seconde partie de code d'unité de programme, et de préférence, dans lequel la référence est un objet de notification, qui, lorsqu'il est exécuté, occasionne l'envoi d'un événement de notification à la seconde unité de programme et/ou à la seconde partie de code d'unité de programme.

9. Procédé selon l'une quelconque des revendications précédentes, dans lequel l'application comprend au moins un élément de tableau de bord, l'élément de tableau de bord comprenant au moins un élément de panneau de tableau de bord, où les interfaces utilisateur de la première unité de programme et de la seconde unité de programme sont situées dans l'élément de tableau de bord et l'élément de panneau de tableau de bord.

10. Procédé selon l'une quelconque des revendications précédentes, dans lequel l'élément d'interface utilisateur de la première unité de programme et/ou de la seconde unité de programme est associé à un identificateur interne, « internalID », qui est interne à l'unité de programme, et à un identificateur externe, « externalID », qui est externe à l'unité de programme, et comprend un identificateur de contexte, « contextID » représentant le contexte dans l'application de l'unité de programme respective, un identificateur d'application, « appID » associé à l'unité de programme et à l'identificateur « internalID », et/ou dans lequel la première unité de programme est intégrée dans la seconde unité de programme, ou la seconde unité de programme est intégrée dans la première unité de programme, de sorte que l'état d'un élément d'interface utilisateur d'une unité de programme peut être transmis à l'autre unité de programme.

11. Procédé selon l'une quelconque des revendications précédentes, dans lequel le procédé comprend l'étape consistant à initialiser la première unité de programme ou la seconde unité de programme au niveau du serveur (20), et de préférence dans lequel l'étape d'initialisation de la première unité de programme ou de la seconde unité de programme au niveau du serveur (20) comprend l'étape consistant à créer le premier objet d'état d'unité de programme ou le second objet d'état d'unité de programme.

12. Procédé selon l'une quelconque des revendications précédentes, dans lequel le premier objet d'état d'unité de programme et/ou le second objet d'état d'unité de programme est ou sont stockés dans la session utilisateur et est ou sont respectivement identifiés par un premier identificateur d'état d'unité de programme ou par un second identificateur d'état d'unité de programme, et de préférence, dans lequel le premier identificateur d'état d'unité de programme et/ou le second identificateur d'état d'unité de programme comprend ou comprennent un identificateur « contextID » représentant le contexte dans l'application de l'unité de programme respective et un identificateur « appID » associé à l'unité de programme, et de préférence, dans lequel le procédé comprend l'étape consistant à récupérer le premier objet d'état d'unité de programme et/ou le second objet d'état d'unité de programme en fonction du premier ou du second identificateur d'état d'unité de programme respectif.

13. Procédé selon l'une quelconque des revendications précédentes, dans lequel le procédé comprend l'étape consistant à créer l'objet de liste d'états de modifications, et/ou dans lequel l'objet de liste d'états de modifications est global pour le serveur (20), de sorte qu'il peut être modifié par le serveur (20), par la première unité de programme et/ou par la seconde unité de programme.

14. Procédé de mise à jour d'une interface utilisateur d'une seconde unité de programme (74) en réponse à une interaction avec une interface utilisateur d'une première unité de programme (50), dans lequel les première et seconde unités de programme sont situées dans une application dans laquelle l'application est agencée de manière à communiquer avec un serveur (20), sur un réseau, le procédé comprenant les étapes ci-dessous consistant à :
recevoir une interaction d'utilisateur au niveau de l'interface utilisateur de la première unité de programme (50), dans lequel l'interaction d'utilisateur est associée à un premier élément d'interface utilisateur dans la première unité de programme ;
envoyer un message, de l'application au serveur (20), en réponse à l'interaction d'utilisateur, le message comprenant : un premier identificateur d'élément d'interface utilisateur, identifiant le premier élément d'interface utilisateur ; et un premier identificateur d'état d'unité de programme, identifiant le premier élément d'interface utilisateur et la première unité de programme, respectivement, et des données représentant l'interaction d'utilisateur ;
recevoir le message au niveau du serveur (20) ;
accéder, au niveau du serveur (20), à un premier objet d'état d'unité de programme, représentant l'état de la première unité de programme, en fonction du premier identificateur d'état d'unité de programme ;
traiter l'interaction d'utilisateur au niveau du serveur (20), et notamment exécuter une première partie de code d'unité de programme, et une seconde partie de code d'unité de programme en fonction de la première partie de code d'unité de programme, les première et seconde parties de code d'unités de programme étant associées aux première et seconde unités de programme, respectivement ;
accéder, au niveau du serveur (20), à un second objet d'état d'unité de programme, représentant l'état de la seconde unité de programme ;
modifier, au niveau du serveur (20), le second objet d'état d'unité de programme en fonction du traitement de l'interaction d'utilisateur ;
modifier, au niveau du serveur (20), un objet de liste d'états de modifications, qui représente des modifications, apportées en fonction du traitement de l'interaction d'utilisateur, au second objet d'état d'unité de programme, et comprend des informations relatives à l'état d'un second élément d'interface utilisateur dans la seconde unité de programme, identifié par un second identificateur d'élément d'interface utilisateur, lesquelles informations sont associées au second identificateur d'élément d'interface utilisateur ;
envoyer une réponse, du serveur (20) à l'application, la réponse comprenant des données représentant l'objet de liste d'états de modifications et incluant le second identificateur d'élément d'interface utilisateur ;
recevoir la réponse au niveau de l'application ; et
mettre à jour le second élément d'interface utilisateur dans l'interface utilisateur de la seconde unité de programme (74), en réponse à la réponse reçue à l'interaction d'utilisateur.

15. Dispositif informatique configuré de manière à fonctionner en qualité de dispositif client (30) comprenant une application destinée à être utilisée dans le cadre d'un procédé de mise à jour d'une interface utilisateur d'une seconde unité de programme (74) en réponse à une interaction avec une interface utilisateur d'une première unité de programme (50) au sein de l'application, dans lequel les première et seconde unités de programme sont situées dans l'application, dans lequel l'application est agencée de manière à communiquer avec un serveur (20) sur un réseau, le dispositif client (30) étant agencé, sous la commande d'un logiciel, de manière à :
recevoir une interaction d'utilisateur au niveau de l'interface utilisateur de la première unité de programme (50), dans lequel l'interaction d'utilisateur est associée à un premier élément d'interface utilisateur dans la première unité de programme ;
envoyer un message, de l'application au serveur (20), en réponse à l'interaction d'utilisateur, le message comprenant un premier identificateur d'élément d'interface utilisateur et un premier identificateur d'état d'unité de programme, identifiant le premier élément d'interface utilisateur et la première unité de programme, respectivement, et des données représentant l'interaction d'utilisateur ;
recevoir une réponse, au niveau de l'application, en provenance du serveur (20), la réponse comprenant des données représentant un objet de liste d'états de modifications et incluant un second identificateur d'élément d'interface utilisateur, le second identificateur d'élément d'interface utilisateur identifiant un second élément d'interface utilisateur dans la seconde unité de programme ; dans lequel l'objet de liste d'états de modifications représente des modifications apportées, en fonction du traitement de l'interaction d'utilisateur au niveau du serveur (20), à un second objet d'état d'unité de programme qui représente l'état de la seconde unité de programme, et comprend des informations relatives à l'état du second élément d'interface utilisateur, lesquelles informations sont associées au second identificateur d'élément d'interface utilisateur ; et
mettre à jour le second élément d'interface utilisateur dans l'interface utilisateur de la seconde unité de programme (74) en réponse à la réponse reçue.

16. Dispositif informatique configuré de manière à fonctionner en qualité de serveur (20) destiné à être utilisé dans le cadre d'un procédé de mise à jour d'une interface utilisateur d'une seconde unité de programme (74) en réponse à une interaction avec une interface utilisateur d'une première unité de programme (50), dans lequel les première et seconde unités de programme sont situées dans une application, le serveur (20) étant agencé de manière à communiquer avec l'application sur un réseau, le serveur (20) étant agencé, sous la commande d'un logiciel, de manière à :
recevoir un message au niveau du serveur (20), en provenance de l'application, le message comprenant un premier identificateur d'élément d'interface utilisateur et un premier identificateur d'état d'unité de programme, identifiant un premier élément d'interface utilisateur et une première unité de programme, respectivement, et des données représentant une interaction d'utilisateur, reçues au niveau de l'application ;
accéder, au niveau du serveur (20), à un premier objet d'état d'unité de programme, représentant l'état de la première unité de programme, en fonction du premier identificateur d'état d'unité de programme ;
traiter l'interaction d'utilisateur au niveau du serveur (20), et notamment exécuter une première partie de code d'unité de programme, et une seconde partie de code d'unité de programme en fonction de la première partie de code d'unité de programme, les première et seconde parties de code d'unités de programme étant associées aux première et seconde unités de programme, respectivement ;
accéder, au niveau du serveur (20), à un second objet d'état d'unité de programme, représentant l'état de la seconde unité de programme ;
modifier, au niveau du serveur (20), le second objet d'état d'unité de programme, en fonction du traitement de l'interaction d'utilisateur ;
modifier, au niveau du serveur (20), un objet de liste d'états de modifications, qui représente des modifications, apportées en fonction du traitement de l'interaction d'utilisateur, au second objet d'état d'unité de programme, et comprend des informations relatives à l'état d'un second élément d'interface utilisateur dans la seconde unité de programme, identifié par un second identificateur d'élément d'interface utilisateur, lesquelles informations sont associées au second identificateur d'élément d'interface utilisateur ; et
envoyer une réponse, du serveur (20) à l'application, la réponse comprenant des données représentant l'objet de liste d'états de modifications et incluant le second identificateur d'élément d'interface utilisateur.
